# EUROPEAN PATENT SPECIFICATION

(11) **EP 4 655 133 B1**
(45) Date of publication and mention of the grant of the patent: **07.10.2026**
(21) Application number: 23838219.6
(22) Date of filing: 18.12.2023
(51) Int. Cl.: B23Q 7/08, B23K 37/047, B23Q 11/08

(54) **MACHINE FOR THE LASER WORKING OF TUBES AND PROFILES, WITH AN IMPROVED UNLOADING SYSTEM FOR UNLOADING THE TUBE OR PROFILE AT THE END OF THE WORKING PROCESS**
MASCHINE ZUR LASERBEARBEITUNG VON ROHREN UND PROFILEN MIT EINEM VERBESSERTEN ENTLADESYSTEM ZUM ENTLADEN DES ROHRS ODER PROFILS AM ENDE DES ARBEITSPROZESSES
MACHINE POUR L'USINAGE AU LASER DE TUBES ET DE PROFILÉS, AVEC UN SYSTÈME DE DÉCHARGEMENT AMÉLIORÉ POUR DÉCHARGER LE TUBE OU PROFILÉ À LA FIN DU PROCESSUS DE TRAVAIL

(30) Priority: 27.01.2023 IT 202300001242
(43) Date of publication of application: 03.12.2025
(73) Proprietor: ADIGE-SYS S.P.A., 38056 Levico Terme (TN) (IT)
(72) Inventor: BALDESSARI, Matteo, 38057 Pergine Valsugana TN (IT); BEBER, Marco, 38050 Novaledo TN (IT); ARMELLINI, Paolo, 38051 Borgo Valsugana TN (IT)
(74) Representative: Rondano, Davide
(86) International application number: PCT/IB2023/062870
(87) International publication number: WO 2024/157076

(56) References cited:
- EP-A1- 2 548 692
- EP-A1- 3 187 303

## Description

### Technical field of the invention

The present invention relates to a machine for the laser working of tubes and profiles, in particular a machine for the laser cutting of tubes and profiles, provided with an unloading system for unloading the tube or profile at the end of the working process.

### State of the art

Unloading systems for machines for the laser working of tubes and profiles, in particular for the laser cutting of tubes and profiles, with the function of unloading each time the tube or profile from the machine once the planned working process has been completed, are known.

For example, EP2492041 discloses an unloading system comprising one or more unloading carriages and one or more support carriages, wherein both the unloading carriage(s) and the support carriage(s) are movable along a forward longitudinal direction of the tube. Each unloading carriage comprises an unloading platform which is hinged to a support structure about an axis of rotation, oriented parallel to the aforementioned longitudinal direction, and is connected to the rod of a hydraulic cylinder. The unloading platform of each unloading carriage is thus movable under control of the hydraulic cylinder between a horizontal position, in which the tube can be unloaded on the upper face of the unloading platform without rolling or sliding, and an inclined position, in which the tube can roll or slide by gravity into a container arranged next to the machine or, alternatively, on a conveyor device arranged next to the machine. EP 2 548 692 A1 discloses a machine for the laser working of tubes and profiles, on which the preamble of claim 1 is based. In said known machine, the divider members are fixed and there is no enclosure or separating elements to separate the working area from the external environment.

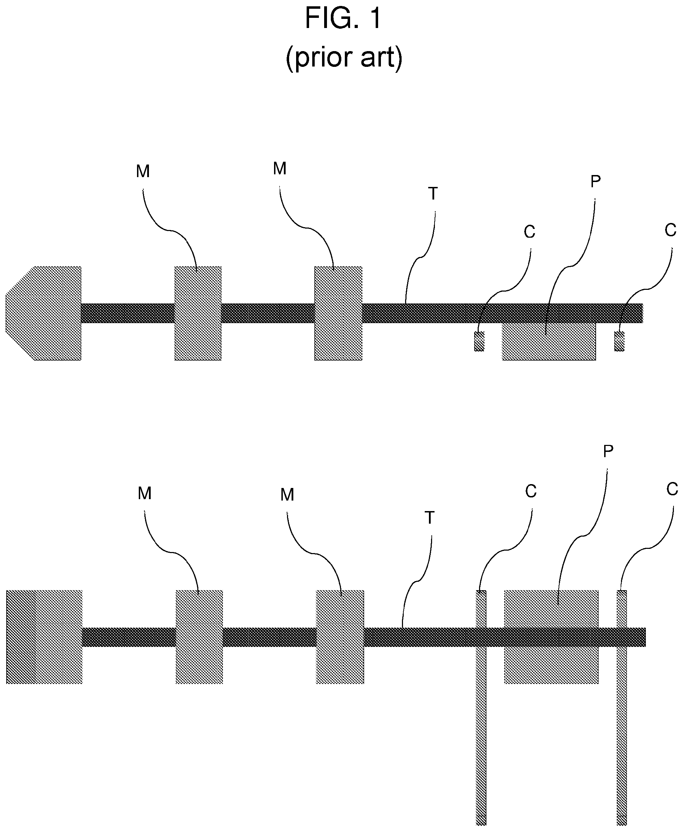

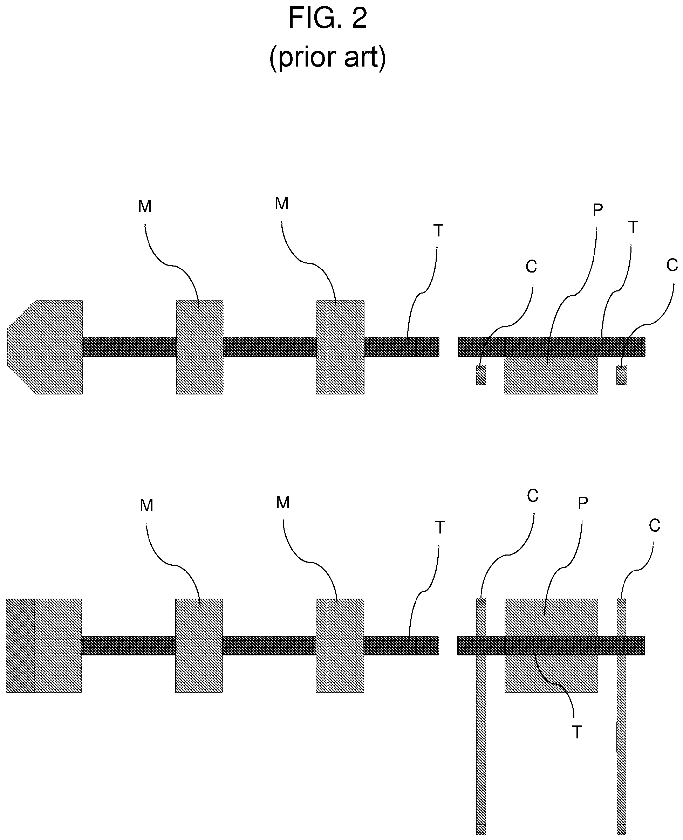

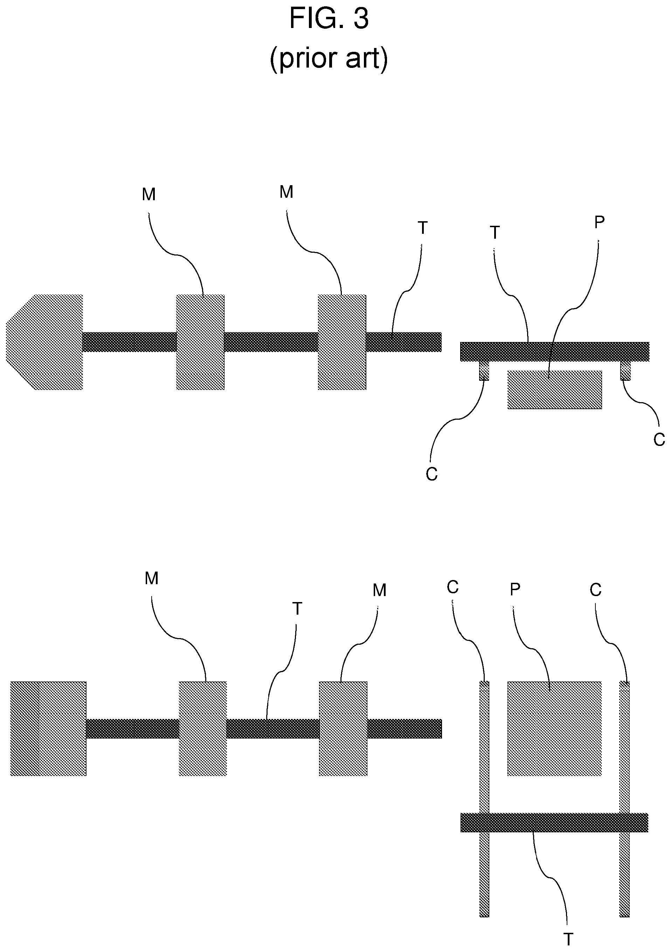

In case of machines intended to work with tubes and profiles of great length, in particular a length of more than 8 metres, and/or with tubes and profiles having a cross-section of great size, in particular with a diameter of more than 300 mm, it is known to use unloading systems comprising, as schematically shown in Figures 1 to 3 of the attached drawings, a vertically movable support plate P, which is arranged under the tube T being worked to support the tube during working and deposit it, at the end of the working process, by vertical downward movement, on a pair of transport chains C provided on opposite sides with respect to the support plate P. During the working process, as shown in Figure 1, the support plate P supports the head portion of the tube T, while the remaining part of the tube is supported by one or more mandrels M. Once the working process has been completed, the worked portion of tube T, still supported by the support plate P, is placed on the transport chains C by virtue of the downward vertical movement of the support plate, as shown in Figures 2 and 3, to be finally transported by the transport chains C out of the working area of the machine. Such an unloading system is used, for example, in the machines LT14 and LT24 manufactured by the Applicant.

Machines for the laser working of tubes and profiles generally require a protection system that laterally delimits the working area, where the tube is placed during working, from the external environment, in order to ensure a high level of safety for the operator. However, the known unloading systems, such as those mentioned above, are not designed to be easily yet effectively integrated with such a protection system.

### Summary of the invention

It is an object of the present invention to provide a machine for the laser working of tubes and profiles with an unloading system for unloading the tube or profile at the end of the working process, which is capable of performing, in addition to the function of unloading the tube or profile, also the function of protecting the working area of the machine from the external environment.

This and other objects are fully achieved according to the present invention by virtue of a machine for the laser working of tubes and profiles provided with an unloading system as defined in independent claim 1.

Advantageous embodiments of the invention are specified in the dependent claims, the subject-matter of which is to be understood as forming part of the following description. In summary, the invention is based on the idea of providing an unloading system comprising one or more divider members arranged along a direction parallel to the feed axis of the machine, wherein each divider member is rotatably supported for rotation about a horizontal axis of rotation, in particular an axis of rotation oriented parallel to the feed axis of the machine, so as to be movable between a lowered position, in which an operating surface of the divider member is facing substantially upwards to receive a tube or profile at the end of the working process, and a raised position, in which the operating surface of the divider member faces away from the feed axis of the machine, such that as a result of the displacement of the divider member from the lowered position to the raised position the tube or profile received on the operating surface of the divider member is moved towards the outside of the machine and, in the raised position, the divider member acts as a separating element separating a working area of the machine from the external environment.

Since it is provided with such movable divider members, the unloading system according to the invention is able to perform, in addition to the normal function of unloading the tube or profile at the end of the working process, the function of protecting the working area from the external environment during working.

According to an embodiment, the unloading system further comprises actuating means, in particular at least one pneumatic cylinder, for controlling the rotation of each divider member about its respective axis of rotation between the lowered position and the raised position.

### Brief description of the drawings

Further features and advantages of the present invention will be evident from the following detailed description, given purely by way of non-limiting example with reference to the accompanying drawings, in which:
- Figures 1 to 3 schematically illustrate the operation of a known unloading system for machines for the laser working of tubes, wherein each figure shows both a side view and a top view of the machine with its unloading system;
- Figures 4 and 5 are perspective views, from two different view angles, of the unloading system of a machine for the laser cutting of tubes and profiles according to an embodiment of the present invention, with the unloading system in the condition of working on a tube;
- Figure 6 is a perspective view similar to Figure 5, but with the unloading system in the condition of unloading of a tube (not shown);
- Figures 7 and 8 are a perspective view and a side view, respectively, showing only the supporting and unloading devices of the unloading system according to Figures 4 and 5, in the tube working condition;
- Figures 9 and 10 are front views showing a divider member of the unloading system according to Figures 4 and 5 in the condition wherein the divider member is lowered and in the condition wherein the divider member is raised, respectively;
- Figure 11 is a perspective view of a supporting and unloading device of the unloading system of Figures 4 and 5;
- Figures 12 and 13 are a side view and a front view of the supporting and unloading device of Figure 11;
- Figure 14 is a perspective view showing in detail the driving unit associated with the table of the supporting and unloading device of Figure 11;
- Figures 15 to 18 are front views showing the supporting and unloading device of Figure 11 in four different positions from a normal working position to an unloading position;
- Figures 19 to 25 are front views showing in sequence a series of positions taken by the table of one of the supporting and unloading devices and by one of the divider members of the unloading system of Figures 4 and 5, when the machine is used with a tube having a circular cross-section; and
- Figures 26 to 35 are front views showing in sequence a series of positions taken by the table of one of the supporting and unloading devices and by one of the divider members of the unloading system of Figures 4 and 5, when the machine is used with a tube having a square cross-section.

### Detailed description

In the following description and claims, the term "longitudinal" is used to identify a direction coincident with, or parallel to, a longitudinal axis of the tube or profile being worked on the machine, while the term "transverse" is used to identify a direction lying in a plane perpendicular to the longitudinal axis. Furthermore, terms such as "upper" and "lower", or "horizontal" and "vertical" etc., used in relation to the unloading system, are intended to refer to the condition in which the unloading system is installed on the machine.

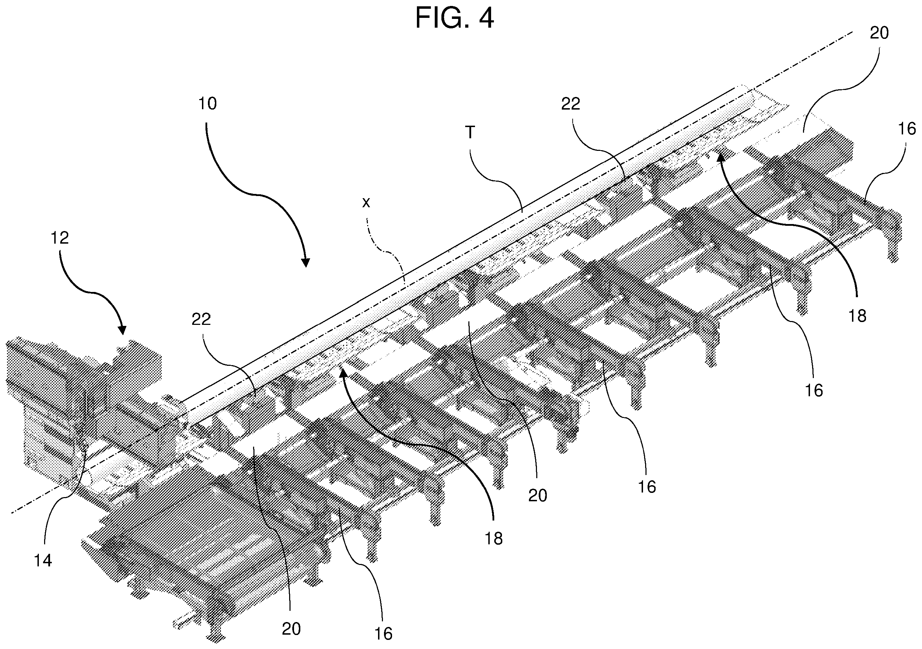

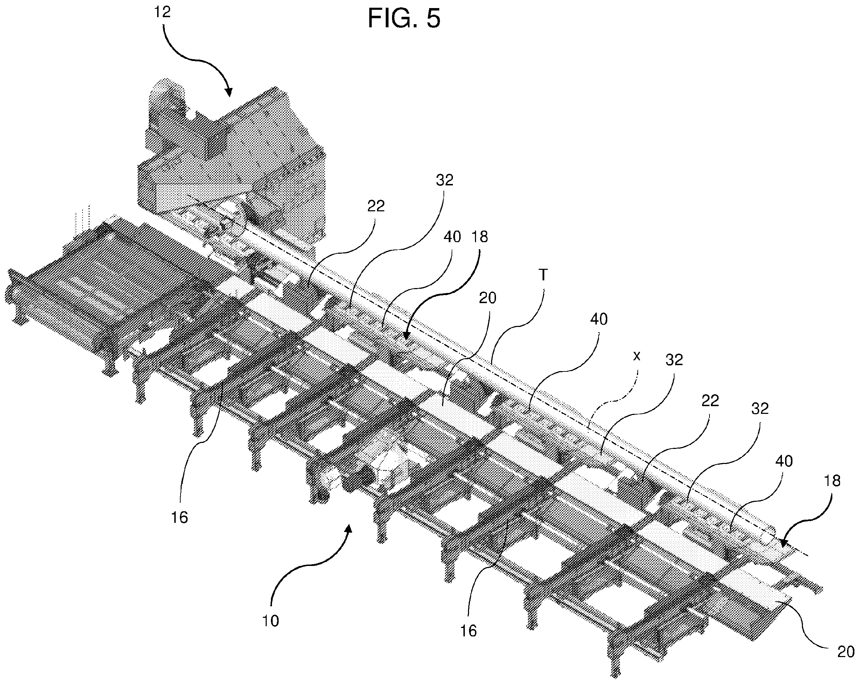

With reference first to Figures 4 and 5, a machine for the working of tubes and profiles, to which an unloading system according to the invention is applicable, is generally indicated with 10. In the example proposed herein, the machine is a machine for the laser cutting of tubes and profiles, but the invention is equally applicable to other types of machines for the laser working of tubes and profiles.

The machine 10 comprises, in a per-se-known manner, a working unit 12 with a working head 14 capable of performing working operations, which in the present case are cutting operations, but might also include other types of operations, such as welding or additive manufacturing operations, by means of a laser beam focused on a tube T. The tube T shown in Figures 4 and 5 is a tube with a circular cross-section, but nevertheless the machine 10 is capable of working on tubes with a cross-section of any other shape, for example (though not exclusively) square or rectangular, as well as on profiles of any shape, for example C-profiles, T-profiles, IPE profiles, HEA profiles, and the like. For the sake of convenience, only the term tube will be used in the following description, it being understood, however, that what is illustrated below is equally applicable to the case the machine is used to work on a profile.

The machine 10 further comprises a tube-holding carriage (not shown, but anyway of a per-se-known type) provided with holding means configured to hold the tube T at an end thereof (tail end). Such holding means define a feed axis x of the machine, with which the longitudinal axis of the tube T is aligned during working. Upstream of the working head 14, and next to it, there is also advantageously provided a support and guide mandrel (not shown, but anyway of a per-se-known type) capable of supporting and guiding the tube T being worked while keeping the longitudinal axis of the tube T aligned with the feed axis x. During working, the tube T is caused by the tube-holding carriage to move forward along the feed axis x, as well as possibly to rotate about this axis.

The machine 10 further includes an unloading system for unloading the tube T at the end of the working process. More precisely, the unloading system has the function of bringing the tube T from the working position in which the tube T is arranged during the working process, that is - as mentioned above - a position in which the longitudinal axis of the tube T is aligned with the feed axis x of the machine, to an unloading position, in which the tube T is displaced laterally with respect to the working position. In particular, in the example illustrated herein, in the unloading position the tube T is arranged on conveyor means, such as conveyor belts 16, arranged alongside the machine 10 and configured to move the tube T laterally, while keeping it substantially parallel to the feed axis x of the machine, until the tube T is brought to a storage area (not shown) where it can be, for example, picked up by appropriate handling means (also not shown, but anyway of a per-se-known type).

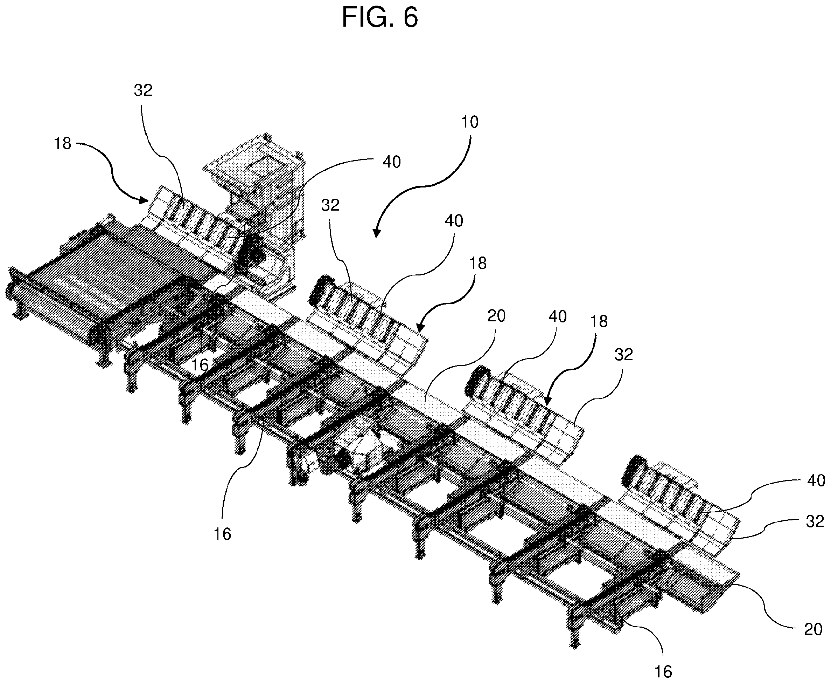

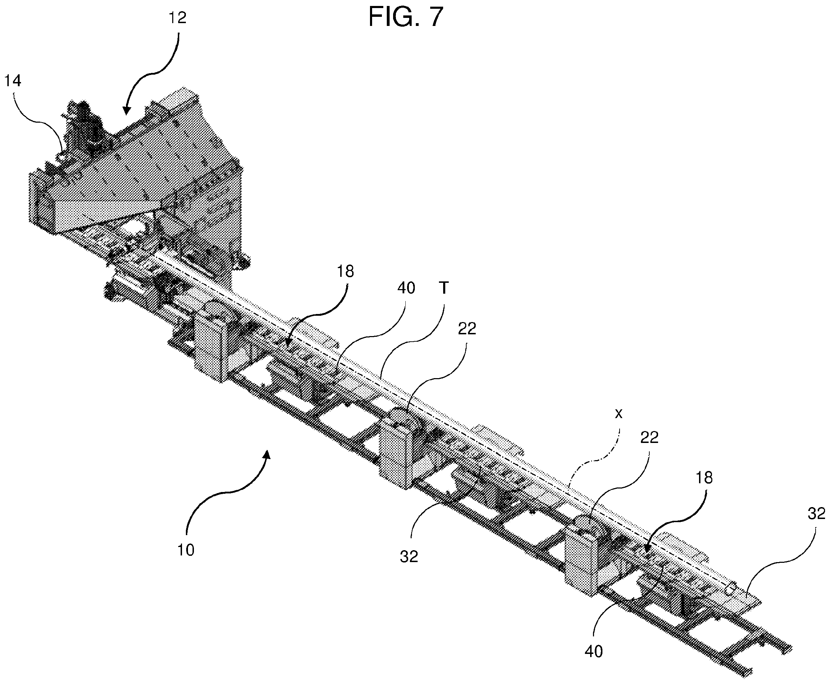

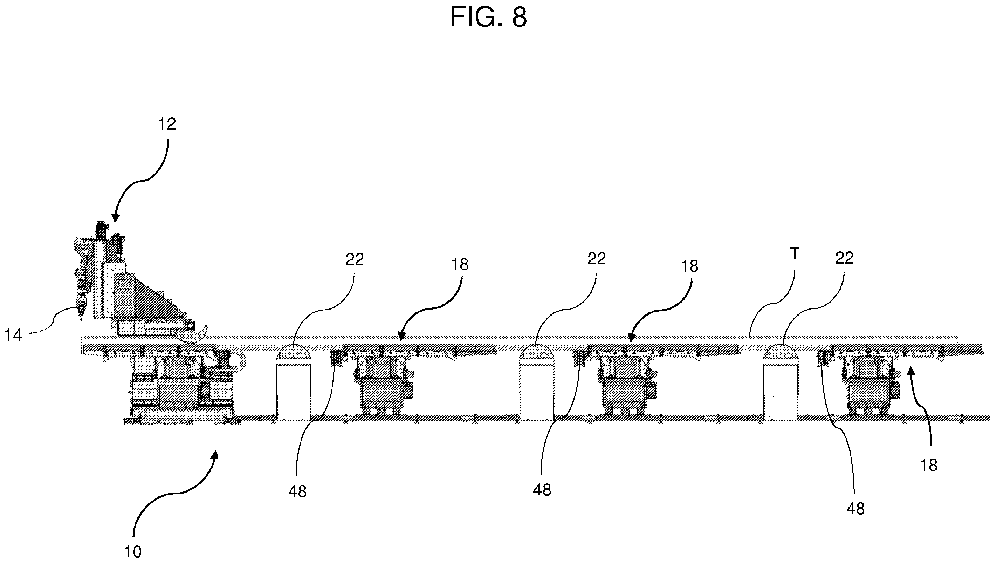

The unloading system basically comprises a plurality of supporting and unloading devices 18 (or, more generally, one or more supporting and unloading devices 18), arranged one after the other along the feed axis x of the machine and below said axis, and a plurality of divider members 20 arranged laterally to the supporting and unloading devices 18, in particular between these latter and the conveyor belts 16. The supporting and unloading devices 18 perform the function of supporting the tube T during the working process, together with any other support devices, such as, for example, rotating support members 22 (as can be more clearly observed in Figures 7 and 8), while once the working process has been completed they perform the function of moving the tube T from the working position, depositing it on the divider members 20. In turn, the divider members 20 perform the function of protection devices during the working process, ensuring a high level of safety for the operator, by separating laterally the working area, in which the tube T being worked is placed, from the external environment, while once the working process has been completed they perform the function of depositing on the conveyor means the tube T received from the supporting and unloading devices 18, as will be explained in detail below. In this respect, Figures 4 and 5, as well as Figures 7 and 8, show the supporting and unloading devices 18 in the working position, in which they support the tube T during the working process, with the tube T arranged with its longitudinal axis aligned with the feed axis x of the machine, while Figure 6 shows the supporting and unloading devices 18 in the unloading position, in which they allow the tube T to be displaced by gravity onto the divider members 20. As far as the divider members 20 are concerned, they are shown in Figures 4 to 6 only in the lowered position, in which they are ready to receive the tube T from the supporting and unloading devices 18.

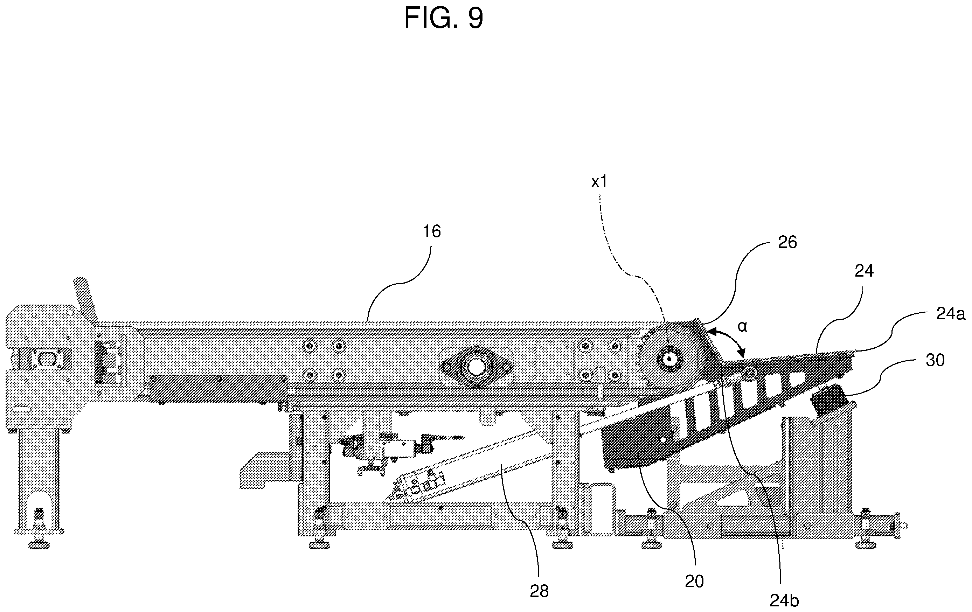

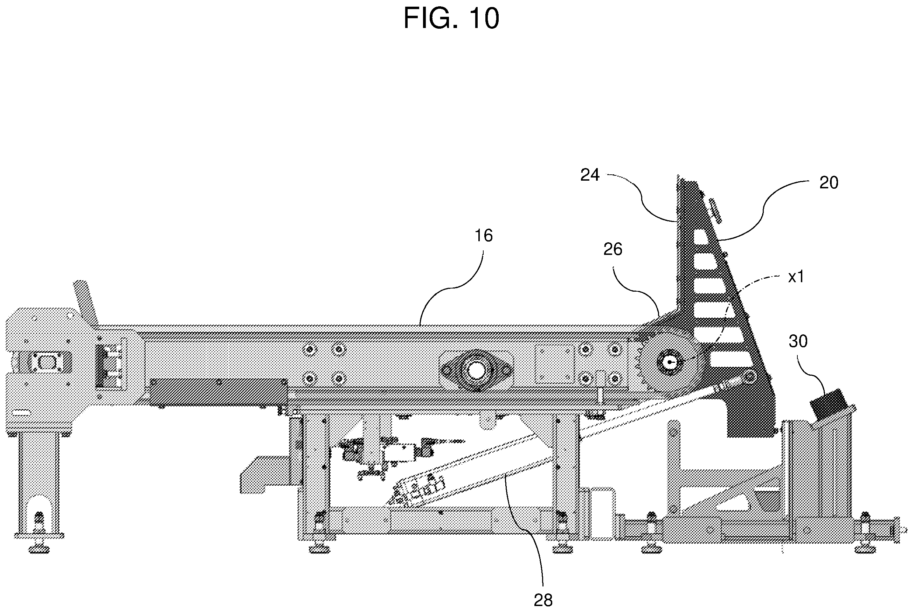

With reference now to Figures 9 and 10, each divider member 20 forms an operating surface which, in the embodiment proposed herein, comprises a first surface portion 24, substantially flat, and a second surface portion 26, also substantially flat, which is arranged adjacent to the first surface portion 24 and forms with the latter an angle α greater than 90°, in particular between 95° and 125°, for example equal to 115°. More generally, however, the operating surface might have a shape different from the one proposed herein, for example being formed by two flat surfaces suitably joined to each other or by a single surface suitably shaped.

Each divider member 20 is movable between the aforementioned lowered position (Figure 9) and a raised position (Figure 10). According to the embodiment proposed herein, the movement of the divider member 20 between the lowered position and the raised position takes place by rotation about a horizontal axis of rotation x1, in particular an axis of rotation oriented parallel to the feed axis x of the machine, under control of actuator means comprising for example one or more pneumatic cylinders 28. In the lowered position of the divider member 20, which is, for example, advantageously defined by limit switch members 30 (only one of which can be seen in Figures 9 and 10), the operating surface faces the supporting and unloading devices 18 in order to receive the tube T from them once the working process has been completed. In particular, in this position the first surface portion 24 is slightly inclined to the horizontal, for example by an angle of between 5° and 15°, so that a proximal longitudinal edge 24a (i.e. a longitudinal edge facing the feed axis x of the machine) of said surface portion is at a height greater than that of a distal longitudinal edge 24b (i.e. a longitudinal edge facing the opposite side with respect to the feed axis x of the machine) of said surface portion. In this way, once the tube T has been deposited by the supporting and unloading devices 18 on the first surface portion 24 of each divider member 20, it can slide or roll along said surface portion towards the second surface portion 26, until it stops against this latter.

In the raised position of the divider member 20, the first surface portion 24 extends substantially vertically and faces the conveyor belt(s) 16, i.e. the opposite side with respect to the feed axis x of the machine.

With the movement of the divider members 20 from the lowered position to the raised position, the tube T resting on the support surfaces of the divider members 20 is then transferred onto the conveyor belts 16 to be transported by the latter to the aforementioned storage area. At this point, the divider members 20 remain in the raised position until the end of the processing of another tube T, thereby acting, thanks to the substantially vertical arrangement of the first surface portion 24, as protection elements that separate laterally the working area of the machine, in which the tube T being worked is placed, from the external environment. As already mentioned, this system ensures a high degree of safety for the operator, since it allows to protect the operator both from laser radiation (emitted by the working head of the machine or reflected by the tube being worked or other surfaces of the machine) and from the projection of particulate and processing residues.

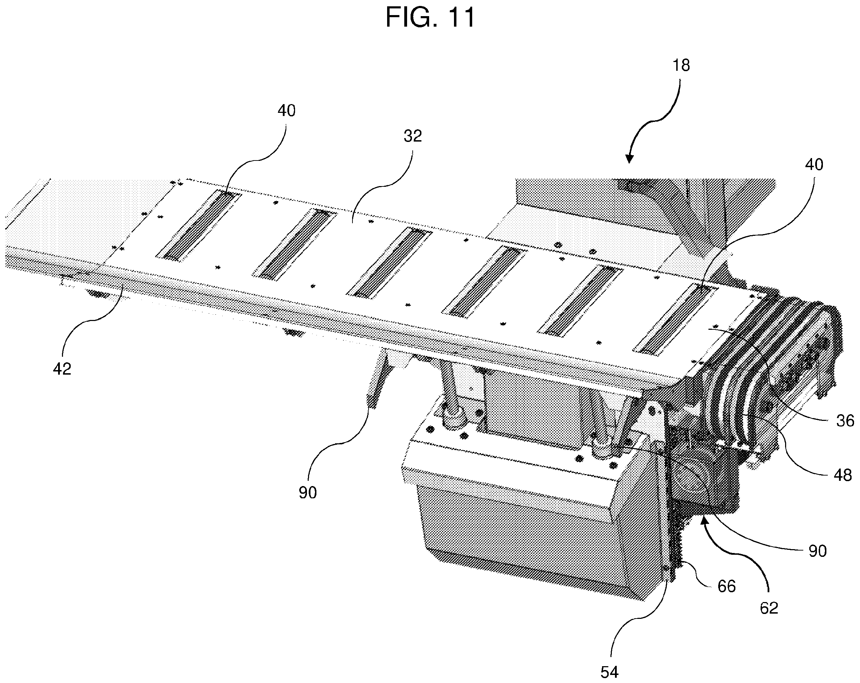

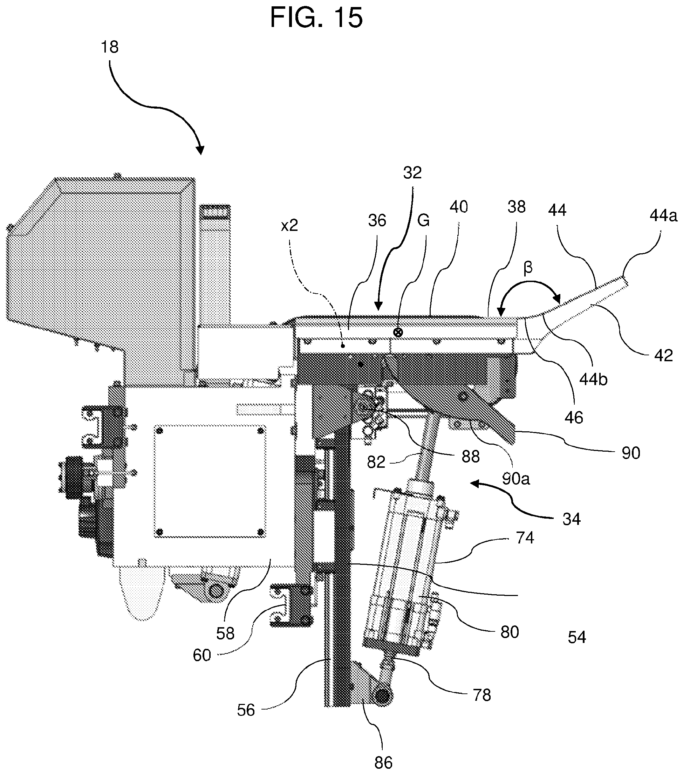

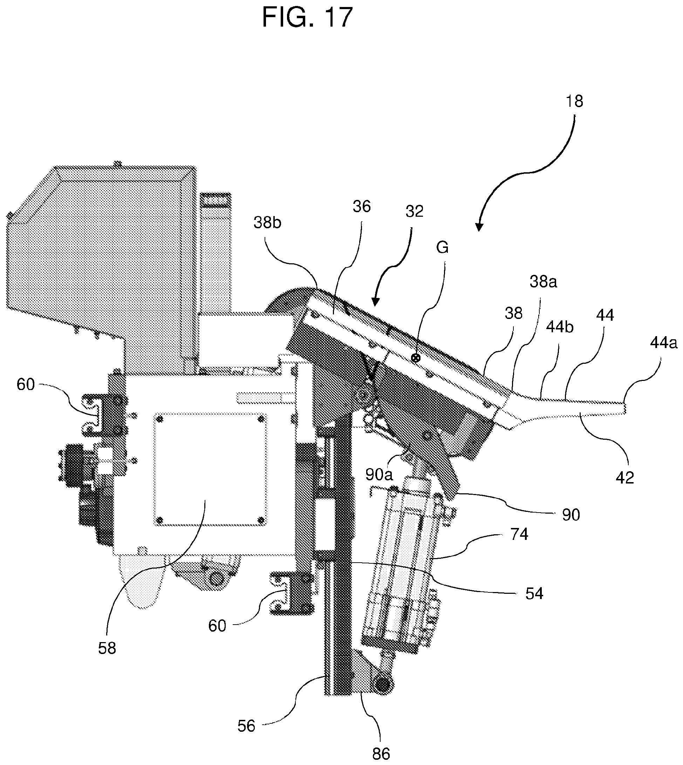

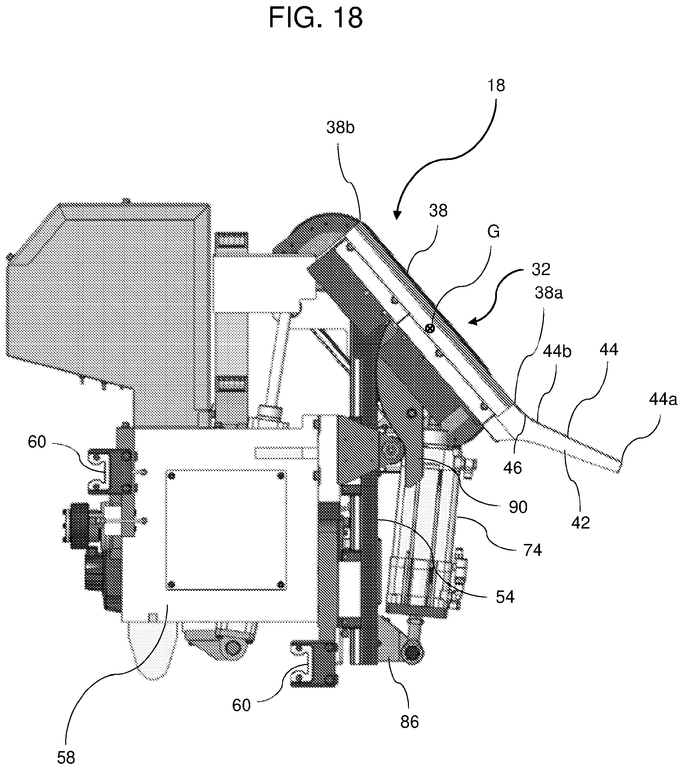

With reference now to Figures 11 to 18, each supporting and unloading device 18 basically comprises a table 32 and a driving unit 34 associated with the table 32 to produce a roto-translational movement of the table 32 in the transverse plane (i.e. in the plane perpendicular to the feed axis x of the machine) between a working position (Figure 15) and an unloading position (Figure 17 or Figure 18). The unloading positions of Figure 17 or Figure 18 are two of the possible unloading positions that can be obtained, since the unloading system is able to suitably define the unloading position depending on the type of tube T being worked.

The table 32 comprises first of all a first table portion 36 having an upper surface 38, which in the embodiment proposed herein is a substantially flat surface, but which might also be a slightly arcuate surface, in particular with concavity facing upwards. A plurality of idle rollers 40 (which can be seen better in Figures 5 to 7) are mounted on the upper surface 38 of the first table portion 36, longitudinally spaced apart from each other, and are rotatably supported for rotation about respective axes of rotation oriented parallel to the plane of the upper surface 38 and perpendicular to the feed axis x of the machine. As shown for example in Figure 7, in the working position of the table 32 the idle rollers 40 act as support elements for the tube T during the working process. The table 32 further comprises a second table portion 42 extending laterally outwards relative to the first table portion 36 and having an upper surface 44. In the example proposed herein, also the upper surface 44 of the second table portion 42, like the upper surface 38 of the first table portion 36, is a substantially flat surface. However, the upper surface 44 might be a non-flat surface, for example it might be a slightly arcuate surface, in particular with concavity facing upwards. The upper surface 44 of the second table portion 42 is inclined by an angle β to the upper surface 38 of the first table portion 36, in particular an angle greater than 135°, preferably an angle greater than 150°, so that when the upper surface 38 is oriented horizontally, an outer longitudinal edge 44a of the upper surface 44 is at a height greater than that of an inner longitudinal edge 44b of said surface, as shown in Figure 15. The upper surface 38 of the first table portion 36 and the upper surface 44 of the second table portion 42 are preferably joined to each other by an arcuate joining surface 46, particularly in the case where both the upper surface 38 and the upper surface 44 are substantially flat surfaces. According to a further embodiment (not shown in the drawings), the table 32 comprises a third table portion which extends laterally inwards relative to the first table portion 36, thus on the opposite side with respect to the second table portion 42, and has an upper surface having, for example, although not necessarily, a shape similar to that of the upper surface 44 of the second table portion 42.

More generally, therefore, the table 32 has a cradle-like shape, with a main portion formed by the first table portion 36 and with one or two lateral portions, formed by the second table portion 42 and, where present, by the third table portion, which extend laterally, like banks, from the opposite longitudinal edges of the first table portion 36. Preferably, in the embodiment proposed herein (as can be better seen in Figures 11 to 14), the first table portion 36 of the table 32 is provided at one of its longitudinal ends with at least one roller chain 48 (in the present case a pair of roller chains arranged side by side) wound on a pair of sprockets 50 and 52. The sprockets 50 and 52 are both mounted in a freely rotatable manner, and thus the roller chain 48 is freely movable in one direction or the other. The roller chains 48 of the tables 32 of the various supporting and unloading devices 18 have the function, while the tube T is being worked, of "accompanying" the possible rotary movements of the tube T about the feed axis x controlled by the holding means of the machine 10 and, during the unloading of the tube T, in particular in the case of a tube with a cross-section of non-circular shape, of facilitating the sliding of the tube T along the first table portion 36, avoiding its slipping on the rollers 40 provided on said table portion. Although in the embodiment proposed herein the roller chains 48 are provided at only one of the two longitudinal ends of each table 32, they might still be provided at both longitudinal ends of each table 32. Furthermore, other devices with a similar function might be provided instead of roller chains.

The driving unit 34, as mentioned above, is configured to move the table 32 between the working position of Figure 15, in which the upper surface 38 of the first table portion 36 is oriented substantially horizontally and the upper surface 44 of the second table portion 42 is therefore inclined to the horizontal by an angle corresponding to the aforementioned angle β, whereby the outer longitudinal edge 44a of the upper surface 44 of the second table portion 42 is placed at a height greater than that of the inner longitudinal edge 44b of said surface, and the unloading position of Figure 17 or Figure 18, in which both the upper surface 38 of the first table portion 36 and the upper surface 44 of the second table portion 42 are inclined to the horizontal, with an outer longitudinal edge 38a of the upper surface 38 of the first table portion 36 placed at a height lower than that of an inner longitudinal edge 38b of said surface and with the outer longitudinal edge 44a of the upper surface 44 of the second table portion 42 placed at a height lower than (or, at most, at the same height as) that of the inner longitudinal edge 44b of said surface.

The table 32 is carried by a first support structure 54 which extends mainly vertically and is supported in a vertically movable manner, by means of linear guides 56 (shown in Figures 15 to 18), by a second support structure 58 of the supporting and unloading device 18. More specifically, the table 32 is hinged with its first table portion 36 to an upper end of the first support structure 54 so as to be able to rotate with respect to the latter about a horizontal axis of rotation x2, in particular an axis of rotation oriented parallel to the feed axis x of the machine. Advantageously, the axis of rotation x2 is not aligned with the centre of gravity G of the first table portion 36 but spaced apart from the latter in the direction of the feed axis x of the machine. In this way, a rotation of the table 32 relative to the first support structure 54 about the axis of rotation x2 in a clockwise or counterclockwise direction (with respect to the point of view of a person looking at Figures 15 to 18) results in a downward or upward displacement, respectively, of the centre of gravity G of the first table portion 36.

Furthermore, the second support structure 58 of each supporting and unloading device 18 is advantageously mounted in turn on a fixed support structure (not shown in the drawings) so that it can be moved relative to the latter parallel to the feed axis x of the machine. In this respect, slide pads fixed to the second support structure 58 and sliding along respective guide rails (not shown) attached to the fixed support structure are indicated with 60.

The driving unit 34 comprises first of all a first actuating device 62 for controlling the vertical translational movement of the first support structure 54 relative to the second support structure 58.

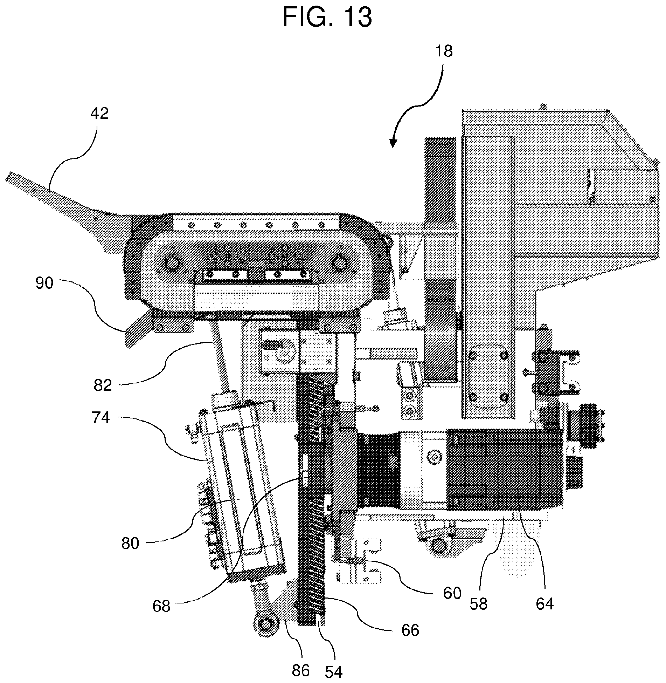

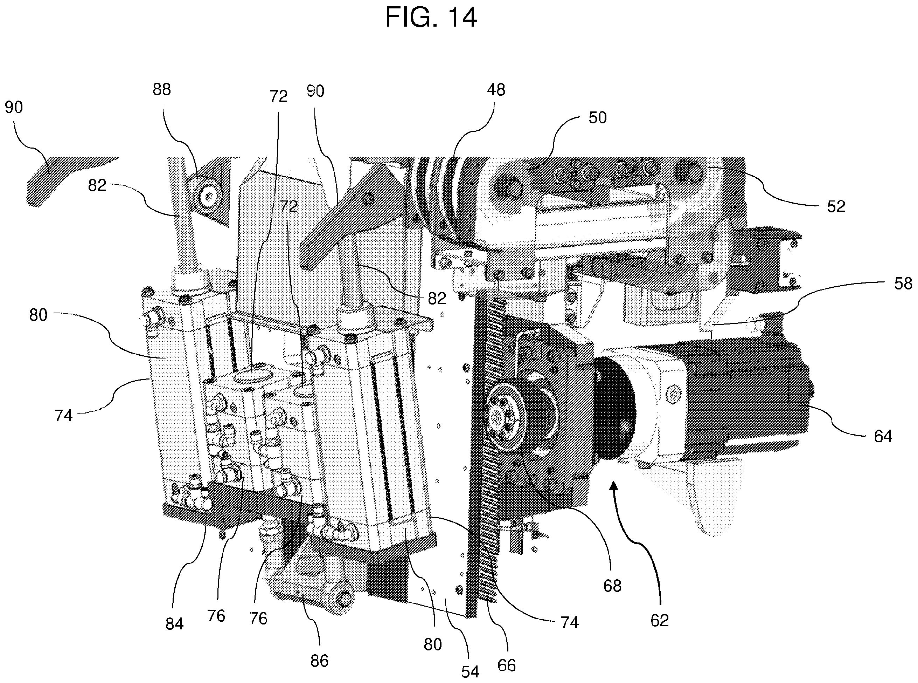

With reference in particular to Figures 13 and 14, in the embodiment proposed herein, the first actuating device 62 comprises a motor 64, in particular an electric motor, arranged to generate a rotary movement and a motion conversion mechanism, for example a mechanism comprising a rack 66 and a pinion 68 meshing with the rack 66, arranged to convert the rotary movement generated by the motor 64 into a vertical translational movement. More specifically, in the illustrated example, the motor 64 is carried by the second support structure 58 and the rack 66 is attached to the first support structure 54. In this way, a rotation of the pinion 68 in one direction or the other controlled by the motor 64 results in a vertical upward or downward translation of the first support structure 54, and therefore of the table 32 carried by the latter. This vertical translational movement serves, among other things, during the processing of the tube T, to suitably position the table 32 vertically relative to the feed axis x so as to provide adequate support to the tube T that is being worked.

The driving unit 34 further comprises a second actuating device 70 interposed between the first support structure 54 and the table 32 so as to generate a rotary movement of the table 32 in one direction or the other relative to the first support structure 54 about the axis of rotation x2.

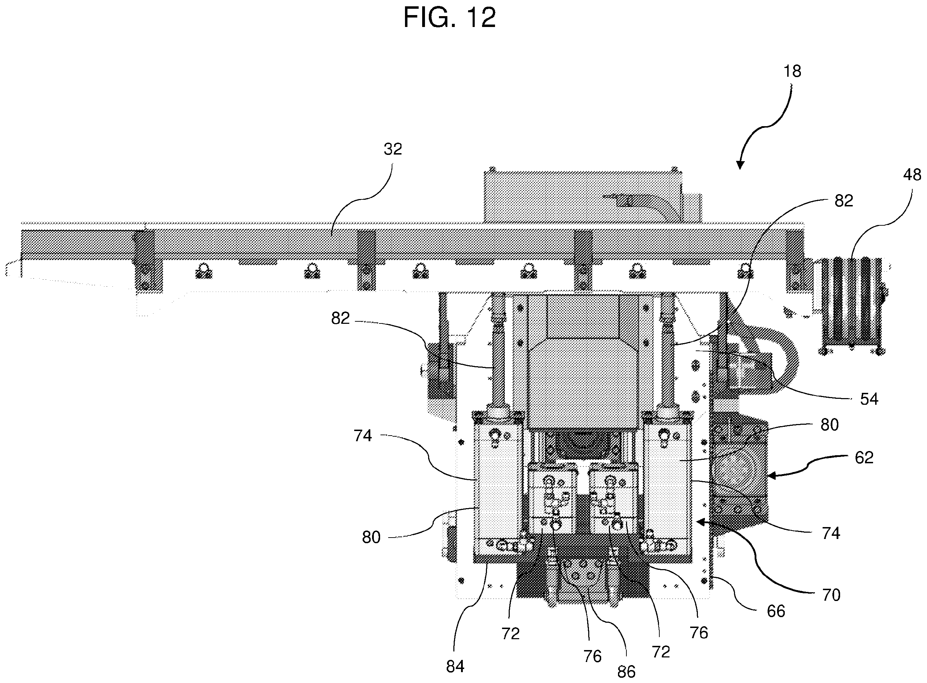

With reference in particular to Figures 12 to 14, in the embodiment proposed herein, the second actuating device 70 comprises a first pair of pneumatic cylinders 72, or more generally a first pair of linear actuators, and a second pair of pneumatic cylinders 74, or more generally a second pair of linear actuators, operating in series with respect to the first pair of pneumatic cylinders 72. The pneumatic cylinders 72 each comprise a cylindrical housing 76 and a rod 78 protruding from the cylindrical housing 76, and, likewise, the pneumatic cylinders 74 each comprise a cylindrical housing 80 and a rod 82 protruding from the cylindrical housing 80. Both the cylindrical housings 76 of the pneumatic cylinders 72 and the cylindrical housings 80 of the pneumatic cylinders 74 are fixed to a support base 84, in particular - although not necessarily - with the cylindrical housings 76 of the pneumatic cylinders 72 arranged centrally next to each other and with the cylindrical housings 80 of the pneumatic cylinders 74 arranged laterally on opposite sides of the cylindrical housings 76 of the pneumatic cylinders 72. The rods 78 of the two pneumatic cylinders 72 are facing downwards and are hinged with their respective free ends to a bracket 86 attached to a lower end of the first support structure 54, while the rods 82 of the pneumatic cylinders 74 are facing upwards and are hinged with their respective free ends to the first table portion 36 of the table 32, in particular to a point of the first table portion 36 located between the centre of gravity G of said table portion and the second table portion 42. A retracting movement of the pneumatic cylinders 72, as well as of the pneumatic cylinders 74, thus produces a rotary movement of the table 32 relative to the first support structure 54 about the axis of rotation x2 in a counterclockwise direction with respect to a person looking at Figure 13, or in a clockwise direction with respect to a person looking at

Figures 15 to 18, i.e. in a direction such that the second table portion 42 is moved downwards.

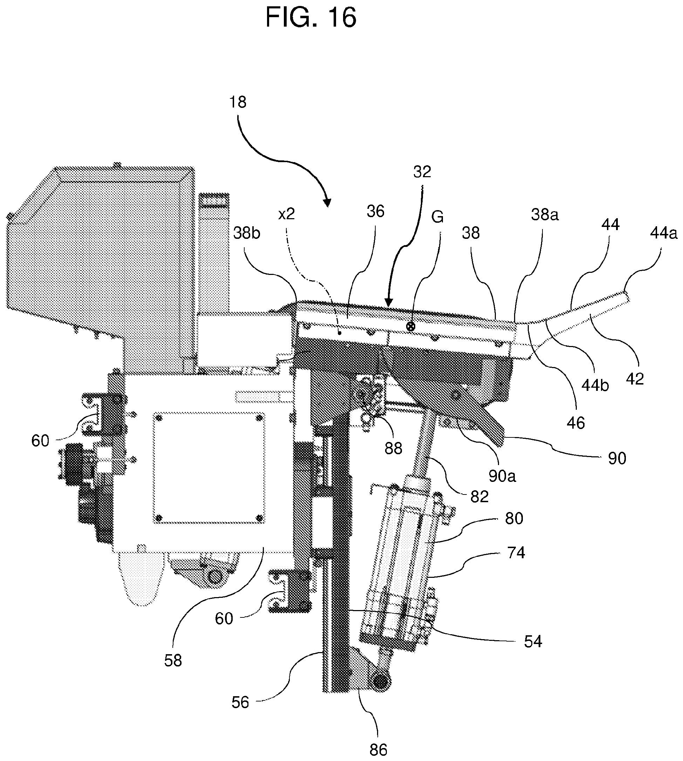

Both the pneumatic cylinders 72 and the pneumatic cylinders 74 are advantageously controlled so as to cause an extension/retraction movement of the respective rod up to the end of its stroke. More specifically, the pneumatic cylinders 72 are configured so that the movement of the respective rods 78 in one direction or the other is such as to cause rotation of the table 32 in one direction or the other about the axis of rotation x2 by a first angle of a small magnitude, for example equal to 5°, as shown in Figure 16, while the pneumatic cylinders 74 are configured so that the movement of the respective rods 82 in one direction or the other is such as to cause rotation of the table 32 in one direction or the other about the axis of rotation x2 by a second angle greater than the first one, in particular an angle greater than 45°, for example equal to 55°, as shown in Figure 18.

The driving unit 34 further comprises a cam mechanism with a roller-shaped rolling element 88 carried by the second support structure 58, in particular above the bracket 86, and with a cam element 90 which is fixed to the table 32, in particular to the first table portion 36, and has a working surface 90a suitably shaped to cooperate with the outer cylindrical surface of the rolling element 88. For reasons of force balancing, there are preferably two such cam mechanisms, arranged on longitudinally opposite sides with respect to the second actuating device 70, as shown in Figure 11, or more generally at least two such cam mechanisms.

In the working position of Figure 15, both the first pair of pneumatic cylinders 72 and the second pair of pneumatic cylinders 74 are extended, so as to keep a substantially horizontal orientation of the upper surface 38 of the first table portion 36. Starting from said position, first the pneumatic cylinders 72 are retracted, so as to cause rotation (clockwise rotation, with respect to a person looking at Figures 15 to 18) of the table 32 relative to the first support structure 54 about the axis of rotation x2 of the aforementioned first angle (for example, equal to 5°), as shown in Figure 15. The pneumatic cylinders 74 are then retracted, so as to cause a further clockwise rotation (with respect to a person looking at Figures 15 to 18) of the table 32 relative to the first support structure 54 about the axis of rotation x2. Such further rotation of the table 32 causes at a certain point, as shown in Figure 17, the cam element 90 of the cam mechanism carried by the table 32 to come into contact with the rolling element 88 carried by the second support structure 58.

In such a condition (which in the example illustrated herein corresponds to a rotation of the table 32 about the axis of rotation x2 by an angle of 25° to the horizontal, but which might, of course, also be a different angle), the pneumatic cylinders 74 are still in traction, since the respective rods 82 have not yet reached the end-of-stroke position of the retraction movement, but a further retraction movement of the respective rods 82 is prevented by the contact between the cam element 90 and the rolling element 88 of the cam mechanism.

At this point, the upward vertical translational movement of the first support structure 54, along with the table 32, is controlled by the first actuating device 62. As a result of this movement, and also as a result of the pulling action exerted by the pneumatic cylinders 74, which keeps the cam element 90 in contact with the rolling element 88 of the cam mechanism, the cam mechanism produces a further rotation of the table 32 relative to the first support structure 54 about the axis of rotation x2 up to the position of

Figure 18. In this last phase of the movement, therefore, the table 32 translates upwards and, at the same time, rotates about the axis of rotation x2 according to a law of motion defined by the profile of the cam element 90 of the cam mechanism. In this case, therefore, the axis of rotation x2 can reach in the unloading position a height greater than the height at which it is located when the table 32 is in the working position.

Depending on the type of tube T being worked, the movements described above with reference to Figures 15 to 18 may be combined in different ways. For example, in the case of small tubes, the pneumatic cylinders 72 and 74 might be actuated simultaneously, instead of sequentially, so that the table 32 reaches the unloading position as quickly as possible. In addition, the rotary movement of the table 32 controlled by the cam mechanism might be performed only partially, in case it is not necessary to achieve a great inclination of the table 32 to the horizontal.

Such movements are managed by a control unit of the machine, which is programmed to send suitable control signals to the various actuators of the driving unit 34, namely to the motor 64 of the first actuating device 62 and to the pairs of pneumatic cylinders 72 and 74 (or, more generally, to the pairs of linear actuators) of the second actuating device 70, in such a way that, once a tube T has been worked, the tables 32 of the one or more supporting and unloading devices 18 (depending on the length of the tube) are moved from the working position to the unloading position defined above, and then brought back to the working position in view of the working of another tube.

Such a driving unit offers the advantage of allowing the movement of the table 32 to be controlled according to the desired law of motion, both in terms of vertical translation and in terms of rotation about the axis of rotation x2, by controlled actuation of the first actuating device 62 only, wherein the term "controlled actuation" is to be understood as meaning position-control actuation. In fact, the pneumatic cylinders 72 and 74 of the second actuating device 70 do not require position control, but as mentioned are simply controlled in extension or retraction. As regards the pneumatic cylinders 72, the movement of the rod 78 in one direction or the other is always a movement up to the end of the stroke, while as regards the pneumatic cylinders 74 the movement of the rod 82 in retraction is determined, when the cam element 90 comes into contact with the rolling element 88 of the cam mechanism, by the profile 90a of the cam element 90, and is therefore controllable through the vertical displacement of the table 32 under control of the first actuating device 62. Such a configuration allows to obtain a driving unit which is robust, yet at the same time less complex and expensive than a solution using, for example, position-control linear actuators.

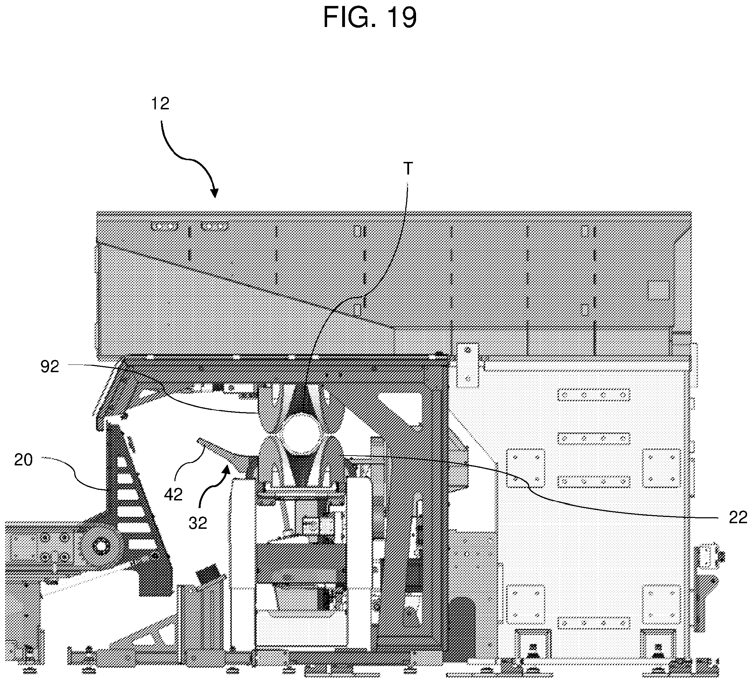

Figures 19 to 25 show the operation of the unloading system described above when the machine is used to work on a tube T with a circular cross-section.

Figure 19 shows the tube T during the working process, supported from below by the tables 32 (not visible in Figure 19) of the various supporting and unloading devices 18, as well as by the rotating support members 22 (only one of which is visible in Figure 19). Furthermore, in the present case the machine is also provided with one or more rotating support members 92 (only one of which is visible in Figure 19) arranged above the feed axis x to laterally restrain the tube T. The divider members 20 are at this stage in the raised position, so as to laterally separate the working area of the machine from the external environment.

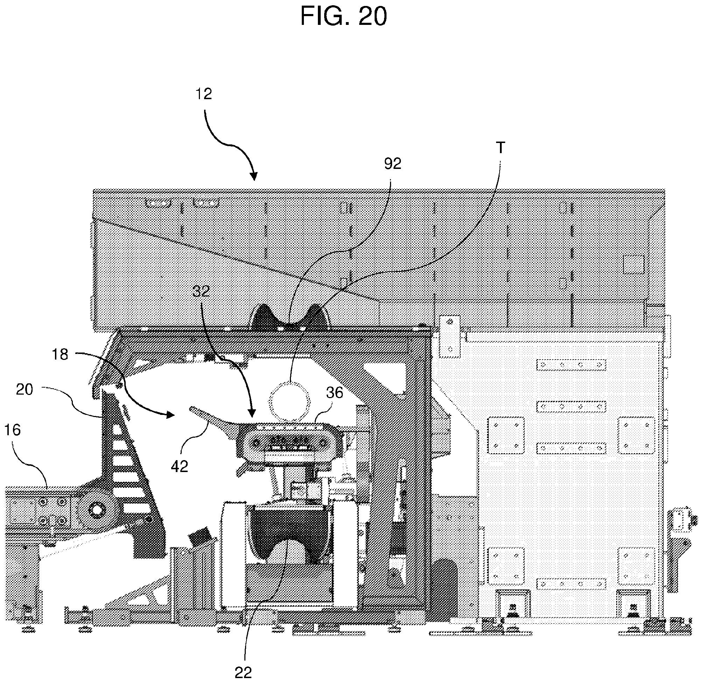

Once the tube T has been worked, the rotating support members 22 and 92 are moved away from the tube T by means of a downward movement of the lower rotating support member(s) 22 and upward movement of the upper rotating support member(s) 92, whereby the tube T remains supported on the tables 32 of the supporting and unloading devices 18 only, as shown in Figure 20. The tables 32 are still in the working position and the divider members 20 are still in the raised position.

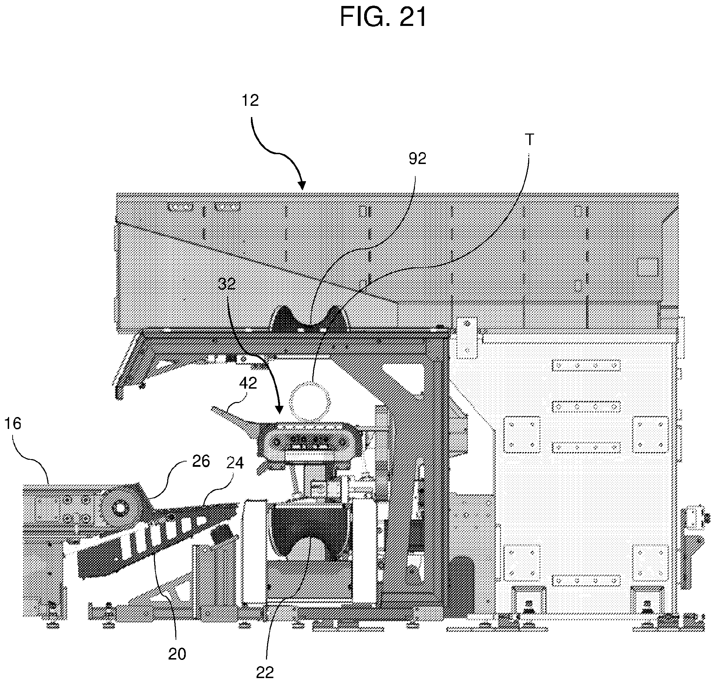

Figure 21 shows a subsequent stage, in which the divider members 20 have been moved to the lowered position, while the table 32 of the supporting and unloading devices 18 are still in the working position.

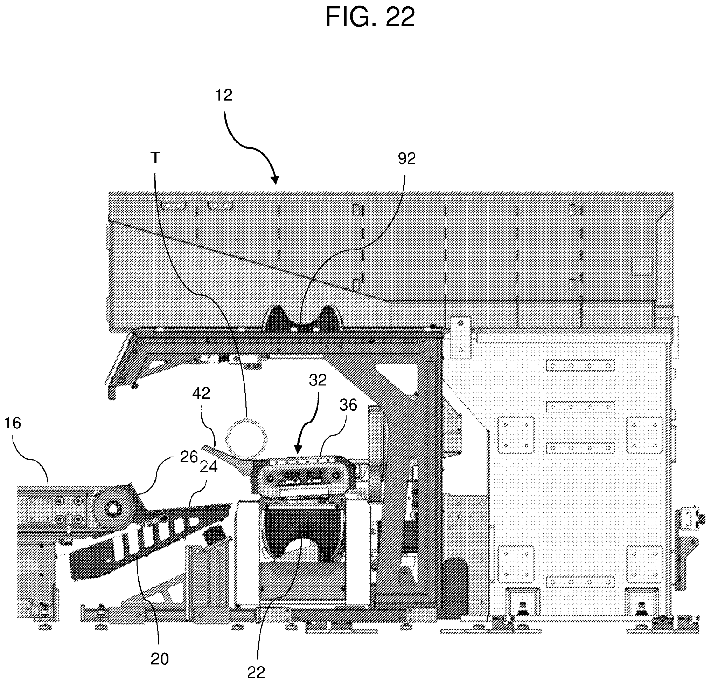

The tables 32 are then brought closer to the respective divider members 20, as shown in Figure 22, by means of downward vertical translational movement of the second support structures 58 of the supporting and unloading devices 18. Furthermore, still with reference to Figure 22, once the downward vertical translational movement of the second support structures 58 has been completed, the tables 32 are slightly tilted by actuation of the pneumatic cylinders 72 of the respective second actuating devices 70, each reaching a position corresponding to that shown in Figure 16. As a result of the inclination of the tables 32, the tube T rolls along the upper surface 38 of the first table portion 36 until it stops at the joining surface 46.

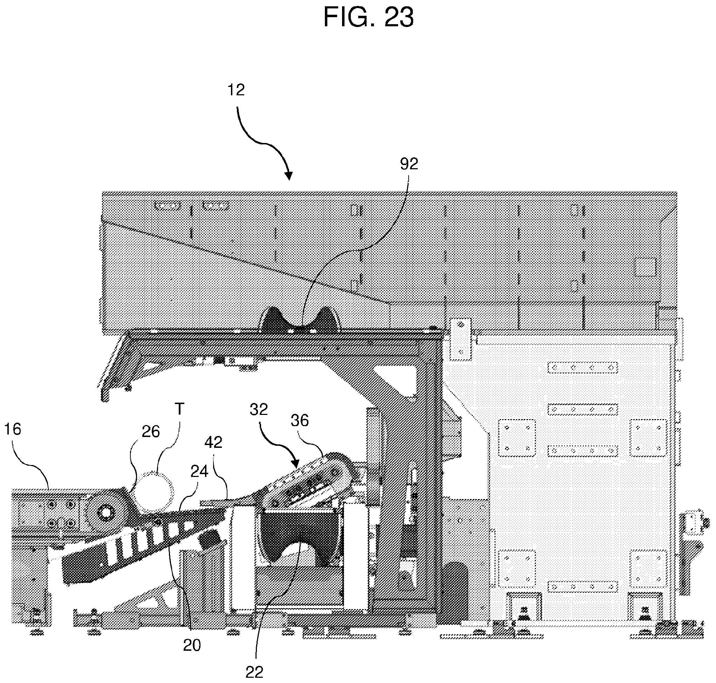

As shown in Figure 23, the tables 32 are further rotated, by operation of the pneumatic cylinders 74 of the second actuating devices 70, until they reach an angular position corresponding to that of Figure 17. In this way, the tube T is transferred from the tables 32 to the divider members 20 and then rolls along the first surface portions 24 of the divider members until coming to rest against the second surface portions 26 of the divider members. In the case of a circular tube T, it is not necessary to move the tables 32 to the position shown in Figure 18, as the inclination of the upper surface 38 of the first table portion 36 and the inclination of the upper surface 44 of the second table portion 42 are sufficient to cause rolling of the tube T from the tables 32 to the divider members 20.

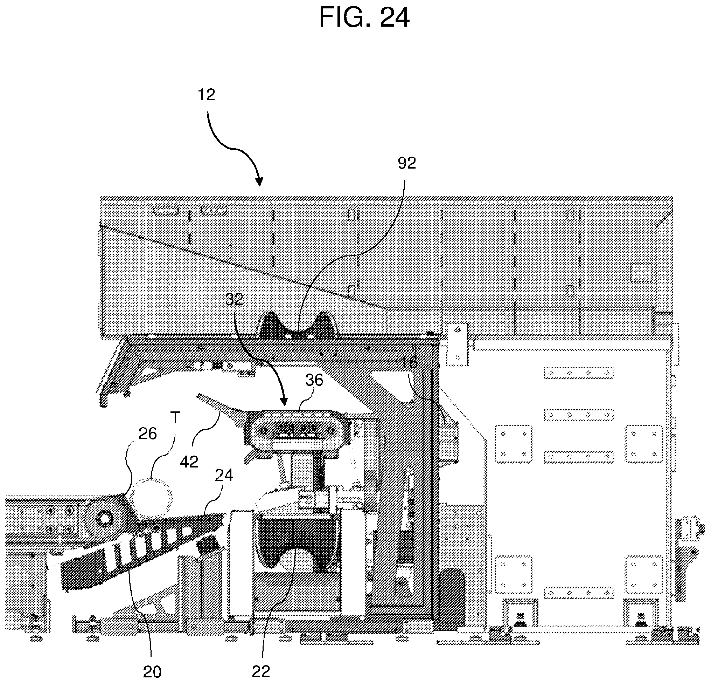

At this point, as shown in Figure 24, the tables 32 of the supporting and unloading devices 18 are brought back to the working position.

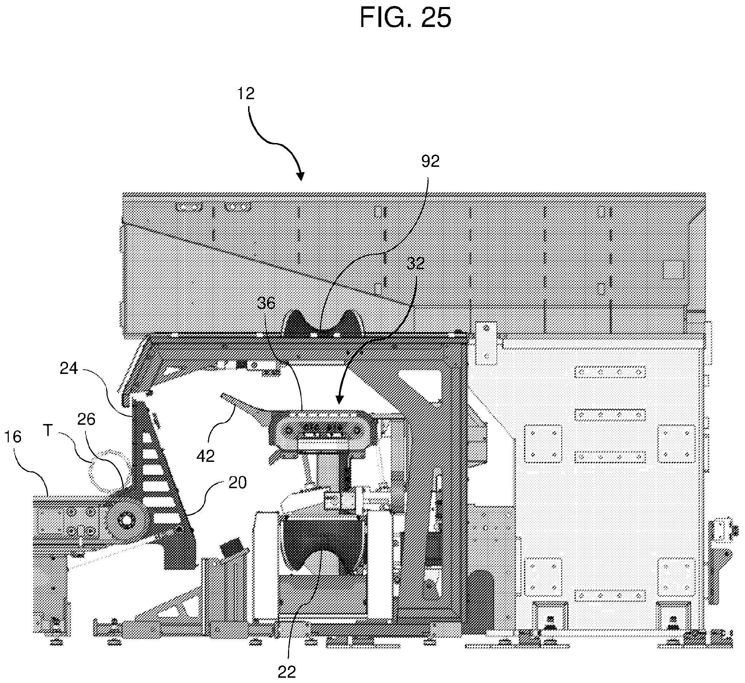

Finally, the divider members 20 are moved from the lowered position to the raised position, with the result that the tube T supported by them is transferred to the conveyor belts 16 (Figure 25). The machine is thus ready to work a new tube.

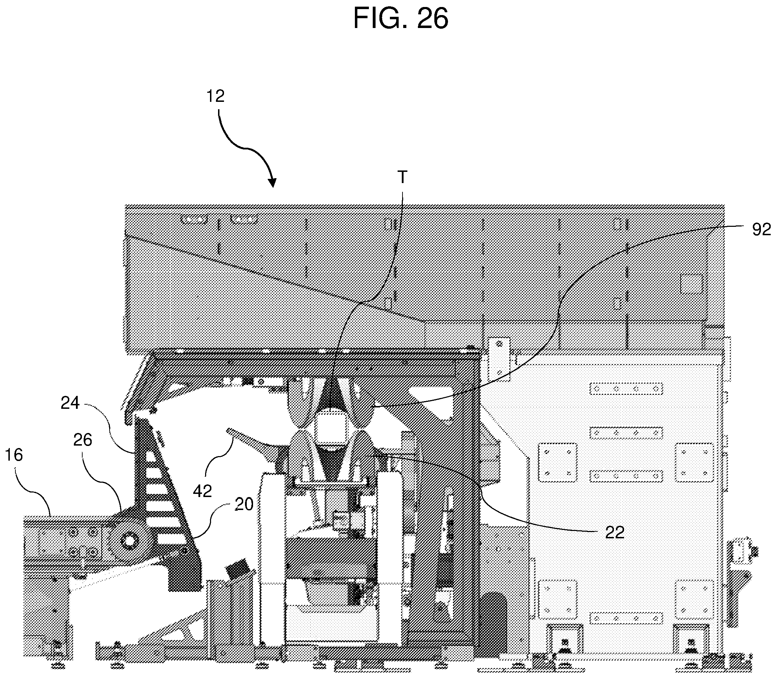

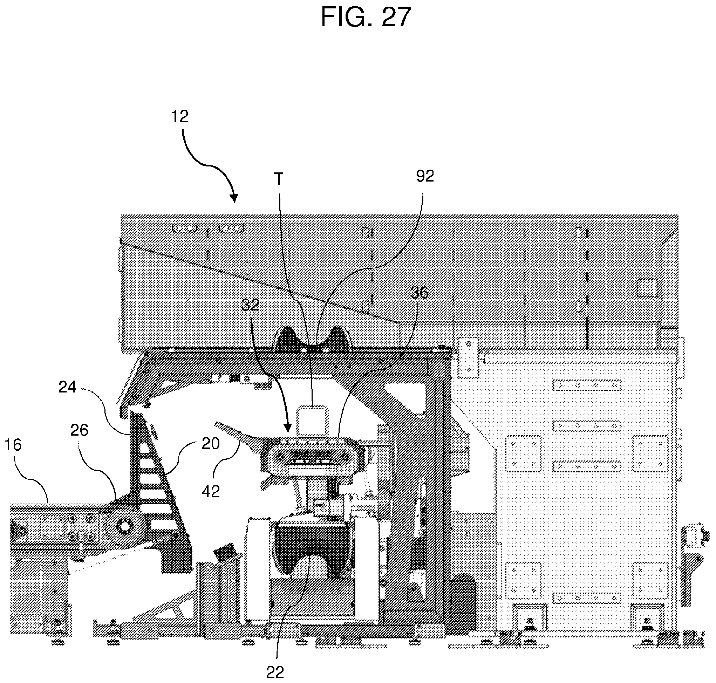

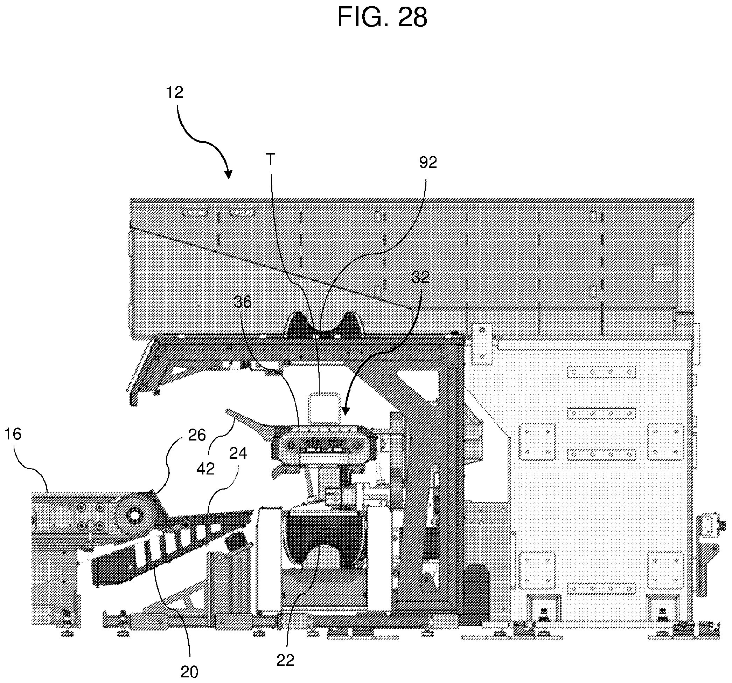

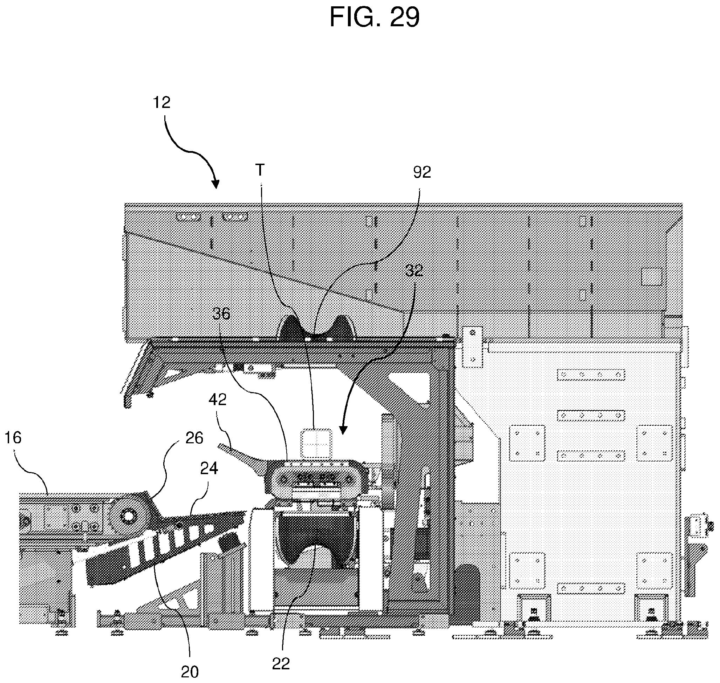

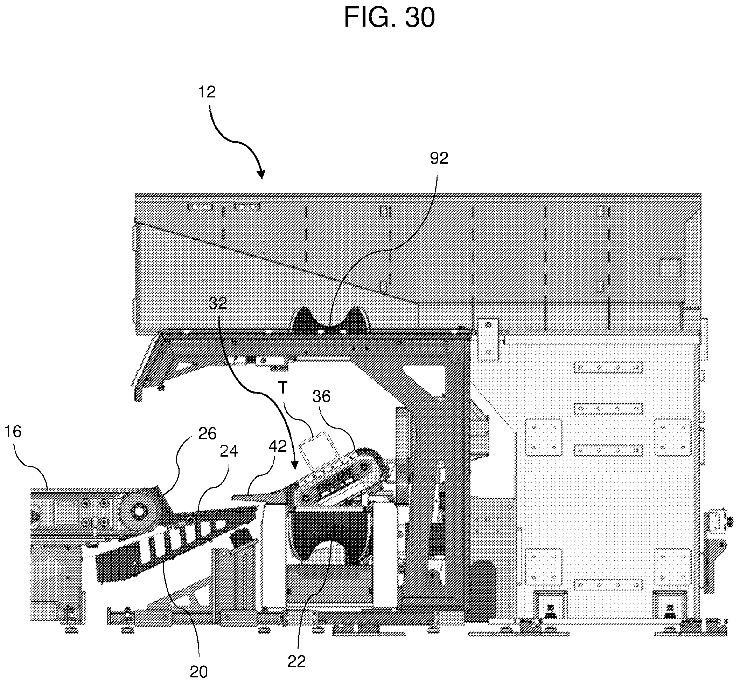

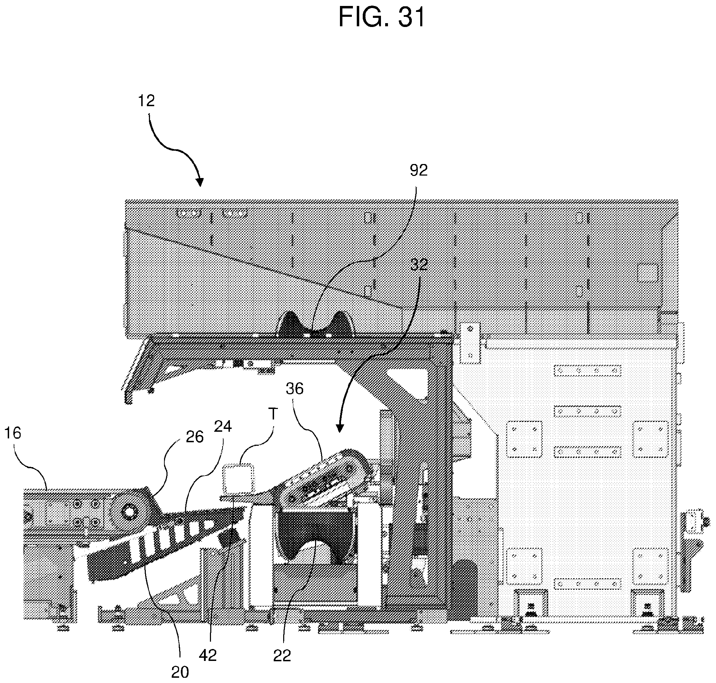

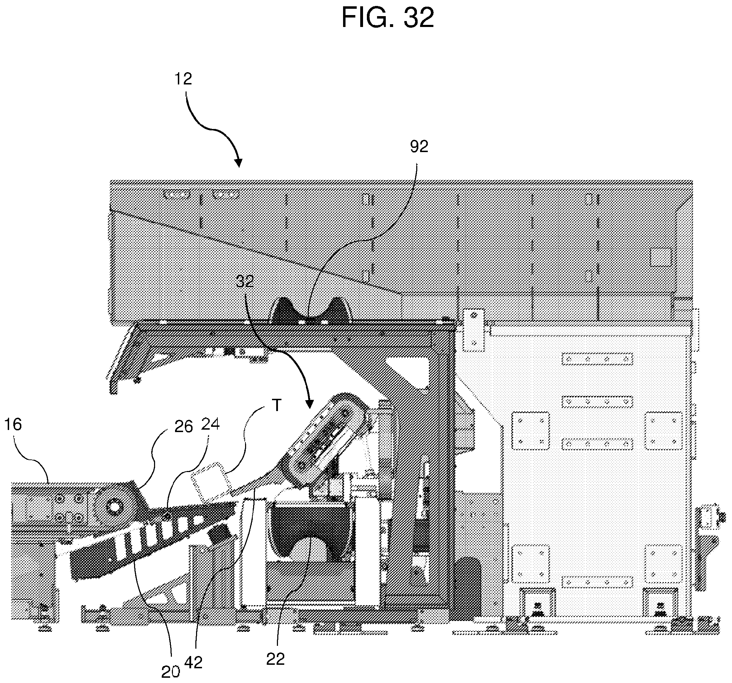

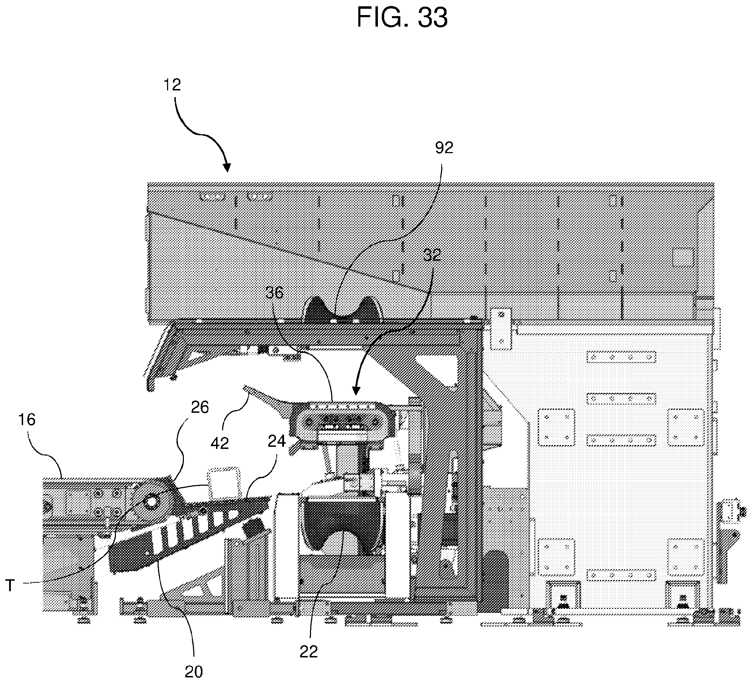

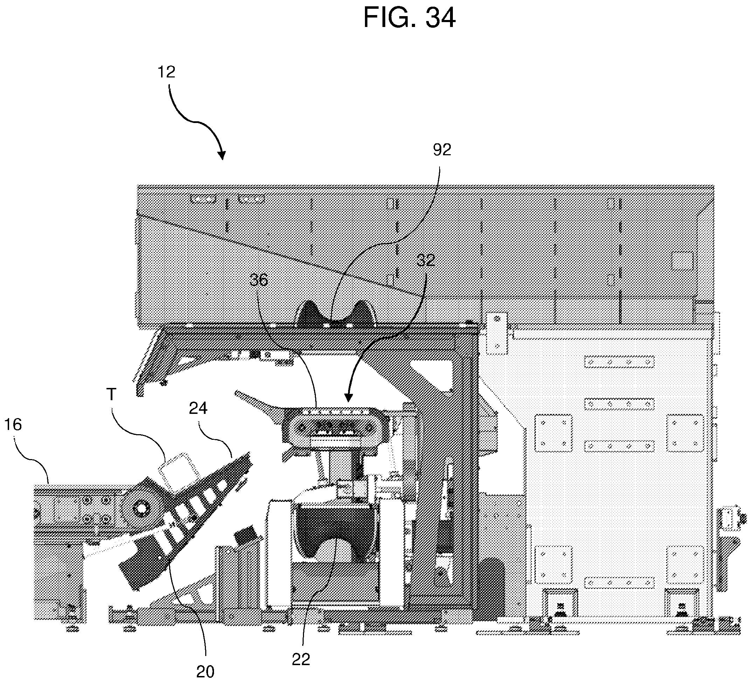

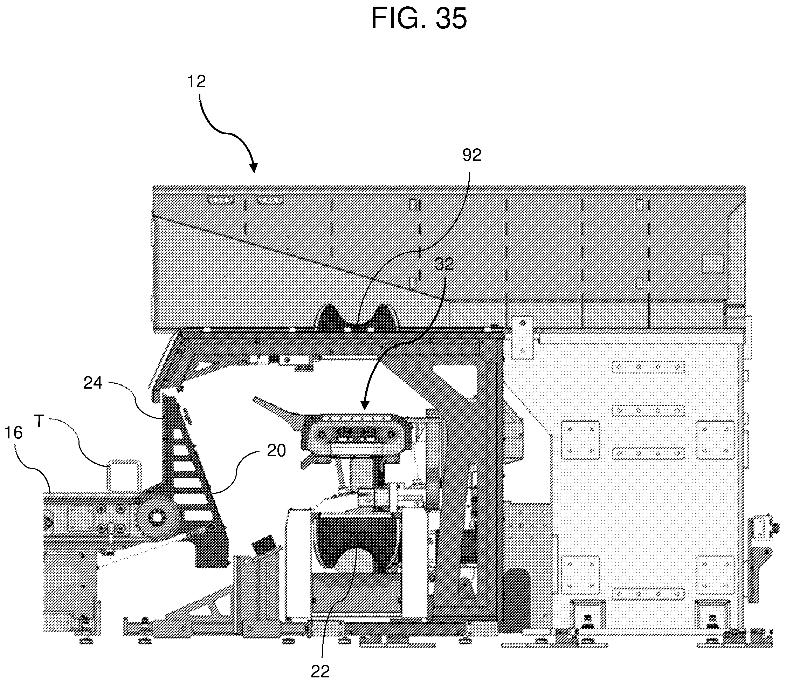

Finally, Figures 26 to 35 show the operation of the unloading system described above when the machine is used for the working of a tube T having a square cross-section. The sequence of movements of the divider members 20 and the tables 32 of the supporting and unloading devices 18 is similar to that described above with reference to Figures 19 to 25 and will therefore not be described in detail again. The only difference is that in this case the tables 32 are moved from the working position to the unloading position of Figure 18, so as to allow the tube T to shift from the second table portion 42 of the tables 32 to the divider members 20 (Figures 31 and 32). In this case, therefore, after having reached the position of Figure 17, the tables 32 are lifted and further rotated about the axis of rotation x2, according to a law of motion defined by the profile of the cam element 90 of the cam mechanism, until they reach the position of Figure 18. The same applies to tubes of any other non-circular shape.

The present invention has been described herein with reference to preferred embodiments thereof. It is to be understood that other embodiments may be envisaged falling under the scope defined by the following claims.

## Claims

1. Machine (10) for the laser working, in particular for the laser cutting, of tubes and profiles (T), comprising
- a working unit (12) provided with a laser working head (14),
- feeding means arranged to move each time a tube or profile (T) to be worked towards the working unit (12) along a feed axis (x), and
- an unloading system (18, 20) for unloading the tube or profile (T) at the end of the working process, said unloading system (18, 20) comprising one or more divider members (20) arranged along a direction parallel to the feed axis (x) of the machine, the machine being **characterised in that** each divider member (20) is rotatably supported for rotation about a horizontal axis of rotation (x1), in particular an axis of rotation oriented parallel to the feed axis (x) of the machine, so as to be movable between a lowered position, in which an operating surface (24, 26) of the divider member (20) is facing substantially upwards to receive a tube or profile (T) at the end of the working process, and a raised position, in which said operating surface (24, 26) is facing away from the feed axis (x) of the machine, so that, as a result of the displacement of the divider member (20) from the lowered position to the raised position, the tube or profile (T) received on the operating surface (24, 26) is moved towards the outside of the machine and, in the raised position, the divider member (20) acts as a separating element separating a working area of the machine from the external environment.

2. Machine according to claim 1, wherein said operating surface (24, 26) of each divider member (20) comprises a first surface portion (24) and a second surface portion (26), which is arranged adjacent to the first surface portion (24) and is inclined to the latter, wherein in said lowered position of the divider member (20) the first surface portion (24) is inclined to the horizontal so that a proximal longitudinal edge (24a) of said surface portion (24) is at a height greater than that of a distal longitudinal edge (24b) of said surface portion (24) to receive the tube or profile (T) and cause it to roll or slide until it comes into abutment against the second surface portion (26), and wherein in said raised position of the divider member (20) the first surface portion (24) extends substantially vertically.

3. Machine according to claim 1 or claim 2, wherein the first surface portion (24) and the second surface portion (26) of said operating surface (24, 26) are substantially flat surfaces forming with each other an angle (α) greater than 90°.

4. Machine according to any one of the preceding claims, wherein the unloading system (18, 20) further comprises actuating means, in particular at least one pneumatic cylinder (28), for controlling the displacement of each divider member (20) between said lowered position and said raised position by rotation about the respective axis of rotation (x1).

5. Machine according to any one of the preceding claims, wherein the unloading system (18, 20) further comprises one or more supporting and unloading devices (18) arranged along the feed axis (x) of the machine and below said axis,
wherein each supporting and unloading device (18) comprises a table (32) and a driving unit (34) associated with the table (32),
wherein the table (32) of each supporting and unloading device (18) comprises a first table portion (36) having an upper surface (38), and a second table portion (42) extending laterally outwards relative to the first table portion (36) and having an upper surface (44), and
wherein said driving unit (34) is configured to produce a roto-translational movement of the table (32) of each supporting and unloading device (18), with a vertical translation and a rotation about a horizontal axis of rotation (x2), oriented parallel to the feed axis (x) of the machine, between a working position, in which the upper surface (38) of the first table portion (36) is oriented so as to support the tube or profile (T) being worked, and in which the upper surface (44) of the second table portion (42) is oriented so that an outer longitudinal edge (44a) of said upper surface (44) is placed at a height greater than that of an inner longitudinal edge (44b) of said upper surface (44), and an unloading position, in which the table (32) is shifted vertically and rotated about said axis of rotation (x2) relative to said working position, in such a manner that an outer longitudinal edge (38a) of the upper surface (38) of the first table portion (36) is placed at a height lower than that of an inner longitudinal edge (38b) of said upper surface (38), and the outer longitudinal edge (44a) of the upper surface (44) of the second table portion (42) is placed at a height lower than or equal to that of the inner longitudinal edge (44b) of said upper surface (44).

6. Machine according to claim 5, wherein the upper surface (38) of the first table portion (36) of the table (32) of each supporting and unloading device (18) is configured in such a manner that when the table (32) is in said working position the outer longitudinal edge (38a) and the inner longitudinal edge (38b) of said upper surface (38) are placed at substantially the same height.

7. Machine according to claim 5 or claim 6, wherein the upper surface (38) of the first table portion (36) and the upper surface (44) of the second table portion (42) of the table (32) of each supporting and unloading device (18) are designed in such a manner that a plane passing through the outer longitudinal edge (44a) and the inner longitudinal edge (44b) of the upper surface (44) of the second table portion (42) is inclined by a given angle (β), in particular an angle greater than 135°, to the upper surface (38) of the first table portion (36).

8. Machine according to any one of claims 5 to 7, wherein the upper surface (38) of the first table portion (36) of the table (32) of each supporting and unloading device (18) is a substantially flat surface.

9. Machine according to any one of claims 5 to 8, wherein the upper surface (44) of the second table portion (42) of the table (32) of each supporting and unloading device (18) is a substantially flat surface.

10. Machine according to claim 8 or claim 9, wherein the table (32) of each supporting and unloading device (18) further has an arcuate joining surface (46) joining the upper surface (38) of the first table portion (36) with the upper surface (44) of the second table portion (42).

11. Machine according to any one of claims 5 to 10, wherein the first table portion (36) of the table (32) of each supporting and unloading device (18) is provided with a plurality of idle rollers (40), arranged longitudinally spaced apart from each other and supported in a freely rotatable manner about respective axes of rotation oriented parallel to the plane of the upper surface (38) of the first table portion (36) and perpendicular to the feed axis (x) of the machine.

12. Machine according to any one of claims 5 to 11, wherein the first table portion (36) of the table (32) of each supporting and unloading device (18) is provided with anti-slipping means configured to allow the tube (T) to slide without slipping along the first table portion (36) when the table (32) is rotated relative to the working position.

13. Machine according to claim 12, wherein said anti-slipping means comprise roller chains (48) mounted on freely rotatable sprockets (50, 52) arranged at one or both longitudinal ends of the first table portion (36).

14. Machine according to any one of claims 5 to 13, wherein said roto-translational movement of the table (32) of each supporting and unloading device (18) provides, at least in a phase thereof, for the translational movement in the vertical direction and the rotary movement about said axis of rotation (x2) to be performed simultaneously.

15. Machine according to claim 14, wherein each supporting and unloading device (18) comprises a first support structure (54), which supports the table (32) in a rotatable manner about said axis of rotation (x2), and a second support structure (58), on which said first support structure (54) is mounted in a vertically movable manner, and wherein said driving unit (34) comprises first actuating means (62) for controlling the vertical translational movement of said first support structure (54) relative to said second support structure (58), and second actuating means (70) interposed between the table (32) and said first support structure (54) for controlling the rotation of the table (32) relative to said first support structure (54) about said axis of rotation (x2).

16. Machine according to claim 15, wherein said second actuating means (70) comprise at least one first linear actuator (72) and at least one second linear actuator (74), operating in series with respect to said first linear actuator (72), wherein said at least one first linear actuator (72) is arranged to produce a rotary movement of the table (32) by a first angle about said axis of rotation (x2), and wherein said at least one second linear actuator (74) is arranged to produce a rotary movement of the table (32) by a second angle greater than said first angle about said axis of rotation (x2).

17. Machine according to claim 16, wherein said driving unit (34) further comprises at least one cam mechanism (88, 90) interposed between the table (32) and said first support structure (54) and configured in such a manner that the law of motion of the rotary movement of the table (32) about said axis of rotation (x2), controlled by said at least one second linear actuator (74), is dependent on the law of motion of the vertical translational movement of the table (32), controlled by said first actuating means (62), at least starting from a given angle of rotation of the table (32) about said axis of rotation (x2) relative to the horizontal.

18. Machine according to any one of claims 5 to 17, wherein said axis of rotation (x2) of the table (32) is spaced apart from the centre of gravity (G) of the first table portion (36) in the direction of the feed axis (x) of the machine, such that a rotation of the table (32) in one direction or the other about said axis of rotation (x2) results in a downward or upward displacement of the centre of gravity (G) of the first table portion (36).

## Patentansprüche

1. Maschine (10) für das Laserbearbeiten, insbesondere für das Laserschneiden, von Rohren und Profilen (T), umfassend
- eine Arbeitseinheit (12), die mit einem Laserbearbeitungskopf (14) versehen ist,
- Vorschiebemittel, die angeordnet sind, um jeweils ein zu bearbeitendes Rohr oder Profil (T) entlang einer Vorschubachse (x) in Richtung der Bearbeitungseinheit (12) zu bewegen, und
- ein Entladesystem (18, 20) zum Entladen des Rohrs oder Profils (T) am Ende des Arbeitsprozesses, wobei das Entladesystem (18, 20) ein oder mehrere Trennelemente (20) umfasst, die entlang einer Richtung parallel zu der Vorschubachse (x) der Maschine angeordnet sind, wobei die Maschine **dadurch gekennzeichnet, dass** jedes Trennelement (20) für eine Drehung um eine horizontale Drehachse (x1), insbesondere eine parallel zu der Vorschubachse (x) der Maschine ausgerichtete Drehachse, drehbar gelagert ist, um zwischen einer abgesenkten Position, in der eine Arbeitsoberfläche (24, 26) des Trennelements (20) im Wesentlichen nach oben weist, um ein Rohr oder Profil (T) am Ende des Arbeitsprozesses aufzunehmen, und einer angehobenen Position, in der die Arbeitsoberfläche (24, 26) von der Vorschubachse (x) der Maschine abgewandt ist, bewegbar zu sein, sodass infolge der Verschiebung des Trennelements (20) aus der abgesenkten Position in die angehobene Position das auf der Arbeitsoberfläche (24, 26) aufgenommene Rohr oder Profil (T) zu der Außenseite der Maschine bewegt wird und das Trennelement (20) in der angehobenen Position als ein Trennelement wirkt, das einen Arbeitsbereich der Maschine von der Außenumgebung trennt.

2. Maschine nach Anspruch 1, wobei die Arbeitsoberfläche (24, 26) jedes Trennelements (20) einen ersten Oberflächenabschnitt (24) und einen zweiten Oberflächenabschnitt (26) umfasst, der angrenzend an den ersten Oberflächenabschnitt (24) angeordnet und zu letzterem geneigt ist, wobei in der abgesenkten Position des Trennelements (20) der erste Oberflächenabschnitt (24) zur Horizontalen geneigt ist, sodass eine proximale Längskante (24a) des Oberflächenabschnitts (24) sich auf einer größeren Höhe befindet als die einer distalen Längskante (24b) des Oberflächenabschnitts (24), um das Rohr oder Profil (T) aufzunehmen und zu bewirken, dass es rollt oder gleitet, bis es an dem zweiten Oberflächenabschnitt (26) in Anschlag kommt, und wobei in der angehobenen Position des Trennelements (20) sich der erste Oberflächenabschnitt (24) im Wesentlichen vertikal erstreckt.

3. Maschine nach Anspruch 1 oder 2, wobei der erste Oberflächenabschnitt (24) und der zweite Oberflächenabschnitt (26) der Arbeitsoberfläche (24, 26) im Wesentlichen flache Oberflächen sind, die miteinander einen Winkel (α) größer als 90° bilden.

4. Maschine nach einem der vorstehenden Ansprüche, wobei das Entladesystem (18, 20) ferner Betätigungsmittel, insbesondere mindestens einen Pneumatikzylinder (28), zur Steuerung der Verschiebung jedes Trennelements (20) zwischen der abgesenkten Position und der angehobenen Position durch Drehung um die jeweilige Drehachse (x1) umfasst.

5. Maschine nach einem der vorstehenden Ansprüche, wobei das Entladesystem (18, 20) ferner eine oder mehrere Stütz- und Entladevorrichtungen (18) umfasst, die entlang der Vorschubachse (x) der Maschine und unterhalb dieser Achse angeordnet sind,
wobei jede Stütz- und Entladevorrichtung (18) einen Tisch (32) und eine dem Tisch (32) zugeordnete Antriebseinheit (34) umfasst,
wobei der Tisch (32) jeder Stütz- und Entladevorrichtung (18) einen ersten Tischabschnitt (36), der eine oberste Oberfläche (38) aufweist, und einen zweiten Tischabschnitt (42), der sich relativ zu dem ersten Tischabschnitt (36) seitlich nach außen erstreckt und eine oberste Oberfläche (44) aufweist, umfasst, und
wobei die Antriebseinheit (34) konfiguriert ist, um eine rototranslatorische Bewegung des Tisches (32) jeder Stütz- und Entladevorrichtung (18) zu erzeugen, mit einer vertikalen Translation und einer Rotation um eine horizontale Drehachse (x2), die parallel zu der Vorschubachse (x) der Maschine ausgerichtet ist, zwischen einer Arbeitsposition, in der die oberste Oberfläche (38) des ersten Tischabschnitts (36) ausgerichtet ist, um das zu bearbeitende Rohr oder Profil (T) zu stützen, und in der die oberste Oberfläche (44) des zweiten Tischabschnitts (42) so ausgerichtet ist, dass eine äußere Längskante (44a) der obersten Fläche (44) auf einer größeren Höhe angeordnet ist als die einer inneren Längskante (44b) der obersten Oberfläche (44), und einer Entladeposition, in der der Tisch (32) vertikal verschoben und um die Drehachse (x2) relativ zu der Arbeitsposition gedreht ist, derart, dass eine äußere Längskante (38a) der obersten Oberfläche (38) des ersten Tischabschnitts (36) auf einer Höhe angeordnet ist, die niedriger ist als die einer inneren Längskante (38b) der obersten Oberfläche (38), und die äußere Längskante (44a) der obersten Oberfläche (44) des zweiten Tischabschnitts (42) auf einer Höhe angeordnet ist, die niedriger als oder gleich derjenigen der inneren Längskante (44b) der obersten Oberfläche (44) ist.

6. Maschine nach Anspruch 5, wobei die oberste Oberfläche (38) des ersten Tischabschnitts (36) des Tisches (32) jeder Stütz- und Entladevorrichtung (18) derart konfiguriert ist, dass, wenn sich der Tisch (32) in der Arbeitsposition befindet, die äußere Längskante (38a) und die innere Längskante (38b) der obersten Oberfläche (38) auf im Wesentlichen der gleichen Höhe angeordnet sind.

7. Maschine nach Anspruch 5 oder 6, wobei die oberste Oberfläche (38) des ersten Tischabschnitts (36) und die oberste Oberfläche (44) des zweiten Tischabschnitts (42) des Tisches (32) jeder Stütz- und Entladevorrichtung (18) derart ausgebildet sind, dass eine Ebene, die durch die äußere Längskante (44a) und die innere Längskante (44b) der obersten Oberfläche (44) des zweiten Tischabschnitts (42) verläuft, um einen bestimmten Winkel (β), insbesondere einen Winkel von mehr als 135°, gegenüber der obersten Oberfläche (38) des ersten Tischabschnitts (36) geneigt ist.

8. Maschine nach einem der Ansprüche 5 bis 7, wobei die oberste Oberfläche (38) des ersten Tischabschnitts (36) des Tisches (32) jeder Stütz- und Entladevorrichtung (18) eine im Wesentlichen flache Oberfläche ist.

9. Maschine nach einem der Ansprüche 5 bis 8, wobei die oberste Oberfläche (44) des zweiten Tischabschnitts (42) des Tisches (32) jeder Stütz- und Entladevorrichtung (18) eine im Wesentlichen flache Oberfläche ist.

10. Maschine nach Anspruch 8 oder 9, wobei der Tisch (32) jeder Stütz- und Entladevorrichtung (18) ferner eine bogenförmige Verbindungsoberfläche (46) aufweist, die die oberste Oberfläche (38) des ersten Tischabschnitts (36) mit der obersten Oberfläche (44) des zweiten Tischabschnitts (42) verbindet.

11. Maschine nach einem der Ansprüche 5 bis 10, wobei der erste Tischabschnitt (36) des Tisches (32) jeder Stütz- und Entladevorrichtung (18) mit einer Vielzahl von Laufrollen (40) bereitgestellt wird, die in Längsrichtung voneinander beabstandet angeordnet und um jeweilige Drehachsen frei drehbar gelagert sind, die parallel zu der Ebene der obersten Oberfläche (38) des ersten Tischabschnitts (36) und senkrecht zu der Vorschubachse (x) der Maschine ausgerichtet sind.

12. Maschine nach einem der Ansprüche 5 bis 11, wobei der erste Tischabschnitt (36) des Tisches (32) jeder Stütz- und Entladevorrichtung (18) mit Antirutschmitteln versehen ist, die konfiguriert sind, um zu ermöglichen, dass das Rohr (T) ohne zu verrutschen entlang des ersten Tischabschnitts (36) gleitet, wenn der Tisch (32) relativ zu der Arbeitsposition gedreht wird.

13. Maschine nach Anspruch 12, wobei die Antirutschmittel Rollenketten (48) umfassen, die auf frei drehbaren Kettenrädern (50, 52) montiert sind, welche an einem oder beiden Längsenden des ersten Tischabschnitts (36) angeordnet sind.

14. Maschine nach einem der Ansprüche 5 bis 13, wobei die rototranslatorische Bewegung des Tisches (32) jeder Stütz- und Entladevorrichtung (18) mindestens in einer Phase davon vorsieht, dass die translatorische Bewegung in der vertikalen Richtung und die rotatorische Bewegung um die Drehachse (x2) gleichzeitig durchgeführt werden.

15. Maschine nach Anspruch 14, wobei jede Stütz- und Entladevorrichtung (18) einen ersten Stützkörper (54), der den Tisch (32) drehbar um die Drehachse (x2) stützt, und einen zweiten Stützkörper (58) umfasst, an dem der erste Stützkörper (54) vertikal beweglich angebracht ist, und wobei die Antriebseinheit (34) erste Betätigungsmittel (62) zum Steuern der vertikalen Translationsbewegung des ersten Stützkörpers (54) relativ zu dem zweiten Stützkörper (58) und zweite Betätigungsmittel (70), die zwischen dem Tisch (32) und dem ersten Stützkörper (54) angeordnet sind, zum Steuern der Drehung des Tisches (32) relativ zu dem ersten Stützkörper (54) um die Drehachse (x2) umfasst.

16. Maschine nach Anspruch 15, wobei die zweiten Betätigungsmittel (70) mindestens einen ersten Linearaktuator (72) und mindestens einen zweiten Linearaktuator (74) umfassen, die in Bezug auf den ersten Linearaktuator (72) in Reihe arbeiten, wobei der mindestens eine erste Linearaktuator (72) angeordnet ist, um eine Drehbewegung des Tisches (32) um einen ersten Winkel um die Drehachse (x2) zu erzeugen, und wobei der mindestens eine zweite Linearaktuator (74) angeordnet ist, um eine Drehbewegung des Tisches (32) um einen zweiten Winkel, der größer als der erste Winkel ist, um die Drehachse (x2) zu erzeugen.

17. Maschine nach Anspruch 16, wobei die Antriebseinheit (34) ferner mindestens einen Nockenmechanismus (88, 90) umfasst, der zwischen dem Tisch (32) und dem ersten Stützkörper (54) angeordnet und derart konfiguriert ist, dass das Bewegungsgesetz der Drehbewegung des Tisches (32) um die Drehachse (x2), die durch den mindestens einen zweiten Linearaktuator (74) gesteuert wird, von dem Bewegungsgesetz der vertikalen Translationsbewegung des Tisches (32), die durch die ersten Betätigungsmittel (62) gesteuert wird, mindestens ab einem bestimmten Drehwinkel des Tisches (32) um die Drehachse (x2) relativ zur Horizontalen abhängig ist.

18. Maschine nach einem der Ansprüche 5 bis 17, wobei die Drehachse (x2) des Tisches (32) von dem Schwerpunkt (G) des ersten Tischabschnitts (36) in Richtung der Vorschubachse (x) der Maschine beabstandet ist, sodass eine Drehung des Tisches (32) in die eine oder die andere Richtung um die Drehachse (x2) zu einer Abwärts- oder Aufwärtsverschiebung des Schwerpunkts (G) des ersten Tischabschnitts (36) führt.

## Revendications

1. Machine (10) destinée à l'usinage au laser, en particulier à la découpe au laser, de tubes et profilés (T), comprenant
- une unité d'usinage (12) pourvue d'une tête d'usinage au laser (14),
- un moyen d'avance agencé pour déplacer chaque fois un tube ou un profilé (T) à usiner vers l'unité d'usinage (12) le long d'un axe d'avance (x), et
- un système de déchargement (18, 20) permettant de décharger le tube ou le profilé (T) à la fin du processus d'usinage, ledit système de déchargement (18, 20) comprenant un ou plusieurs éléments de séparation (20) agencés le long d'une direction parallèle à l'axe d'avance (x) de la machine, la machine étant **caractérisée en ce que** chaque élément de séparation (20) est supporté en rotation pour une rotation autour d'un axe de rotation horizontal (x1), en particulier un axe de rotation orienté parallèlement à l'axe d'avance (x) de la machine, de manière à être mobile entre une position abaissée, dans laquelle une surface de fonctionnement (24, 26) de l'élément de séparation (20) est orientée sensiblement vers le haut pour recevoir un tube ou un profilé (T) à la fin du processus d'usinage, et une position relevée, dans laquelle ladite surface de fonctionnement (24, 26) est orientée à l'opposé de l'axe d'avance (x) de la machine, de sorte que, en conséquence du déplacement de l'élément de séparation (20) de la position abaissée à la position relevée, le tube ou le profilé (T) reçu sur la surface de fonctionnement (24, 26) est déplacé vers l'extérieur de la machine et, dans la position relevée, l'élément de séparation (20) agit en tant qu'élément de séparation séparant une zone de travail de la machine de l'environnement extérieur.

2. Machine selon la revendication 1, dans laquelle ladite surface de fonctionnement (24, 26) de chaque élément de séparation (20) comprend une première partie de surface (24) et une seconde partie de surface (26), qui est agencée adjacente à la première partie de surface (24) et est inclinée par rapport à cette dernière, dans laquelle, dans ladite position abaissée de l'élément de séparation (20), la première partie de surface (24) est inclinée par rapport à l'horizontale de sorte qu'un bord longitudinal proximal (24a) de ladite partie de surface (24) se trouve à une hauteur supérieure à celle d'un bord longitudinal distal (24b) de ladite partie de surface (24) pour recevoir le tube ou le profilé (T) et le faire rouler ou glisser jusqu'à ce qu'il vienne en butée contre la seconde partie de surface (26), et dans laquelle, dans ladite position surélevée de l'élément de séparation (20), la première partie de surface (24) s'étend sensiblement verticalement.

3. Machine selon la revendication 1 ou la revendication 2, dans laquelle la première partie de surface (24) et la seconde partie de surface (26) de ladite surface de fonctionnement (24, 26) sont des surfaces sensiblement planes formant l'une avec l'autre un angle (α) supérieur à 90°.

4. Machine selon l'une quelconque des revendications précédentes, dans laquelle le système de déchargement (18, 20) comprend en outre un moyen d'actionnement, en particulier au moins un cylindre pneumatique (28), permettant de commander le déplacement de chaque élément de séparation (20) entre ladite position abaissée et ladite position relevée par rotation autour de l'axe de rotation (x1) respectif.

5. Machine selon l'une quelconque des revendications précédentes, dans laquelle le système de déchargement (18, 20) comprend en outre un ou plusieurs dispositifs de support et de déchargement (18) agencés le long de l'axe d'avance (x) de la machine et en dessous dudit axe,
dans laquelle chaque dispositif de support et de déchargement (18) comprend une table (32) et une unité d'entraînement (34) associée à la table (32),
dans laquelle la table (32) de chaque dispositif de support et de déchargement (18) comprend une première partie de table (36) ayant une surface supérieure (38), et une seconde partie de table (42) s'étendant latéralement vers l'extérieur par rapport à la première partie de table (36) et ayant une surface supérieure (44), et
dans laquelle ladite unité d'entraînement (34) est conçue pour produire un mouvement de roto-translation de la table (32) de chaque dispositif de support et de déchargement (18), avec une translation verticale et une rotation autour d'un axe de rotation horizontal (x2), orienté parallèlement à l'axe d'avance (x) de la machine, entre une position de travail, dans laquelle la surface supérieure (38) de la première partie de table (36) est orientée de manière à supporter le tube ou le profilé (T) en cours d'usinage, et dans laquelle la surface supérieure (44) de la seconde partie de table (42) est orientée de sorte qu'un bord longitudinal externe (44a) de ladite surface supérieure (44) est placé à une hauteur supérieure à celle d'un bord longitudinal interne (44b) de ladite surface supérieure (44), et une position de déchargement, dans laquelle la table (32) est décalée verticalement et est amenée à tourner autour dudit axe de rotation (x2) par rapport à ladite position de travail, de telle sorte qu'un bord longitudinal externe (38a) de la surface supérieure (38) de la première partie de table (36) est placé à une hauteur inférieure à celle d'un bord longitudinal interne (38b) de ladite surface supérieure (38), et le bord longitudinal externe (44a) de la surface supérieure (44) de la seconde partie de table (42) est placé à une hauteur inférieure ou égale à celle du bord longitudinal interne (44b) de ladite surface supérieure (44).

6. Machine selon la revendication 5, dans laquelle la surface supérieure (38) de la première partie de table (36) de la table (32) de chaque dispositif de support et de déchargement (18) est conçue de telle sorte que, lorsque la table (32) se trouve dans ladite position de travail, le bord longitudinal externe (38a) et le bord longitudinal interne (38b) de ladite surface supérieure (38) sont placés sensiblement à la même hauteur.

7. Machine selon la revendication 5 ou la revendication 6, dans laquelle la surface supérieure (38) de la première partie de table (36) et la surface supérieure (44) de la seconde partie de table (42) de la table (32) de chaque dispositif de support et de déchargement (18) sont conçues de telle sorte qu'un plan passant à travers le bord longitudinal externe (44a) et le bord longitudinal interne (44b) de la surface supérieure (44) de la seconde partie de table (42) est incliné selon un angle (β) donné, en particulier un angle supérieur à 135°, par rapport à la surface supérieure (38) de la première partie de table (36).

8. Machine selon l'une quelconque des revendications 5 à 7, dans laquelle la surface supérieure (38) de la première partie de table (36) de la table (32) de chaque dispositif de support et de déchargement (18) est une surface sensiblement plane.

9. Machine selon l'une quelconque des revendications 5 à 8, dans laquelle la surface supérieure (44) de la seconde partie de table (42) de la table (32) de chaque dispositif de support et de déchargement (18) est une surface sensiblement plane.

10. Machine selon la revendication 8 ou la revendication 9, dans laquelle la table (32) de chaque dispositif de support et de déchargement (18) a en outre une surface de jonction arquée (46) joignant la surface supérieure (38) de la première partie de table (36) avec la surface supérieure (44) de la seconde partie de table (42).

11. Machine selon l'une quelconque des revendications 5 à 10, dans laquelle la première partie de table (36) de la table (32) de chaque dispositif de support et de déchargement (18) est pourvue d'une pluralité de rouleaux libres (40), agencés longitudinalement espacés les uns des autres et supportés de manière librement rotative autour d'axes de rotation respectifs orientés parallèlement au plan de la surface supérieure (38) de la première partie de table (36) et perpendiculairement à l'axe d'avance (x) de la machine.

12. Machine selon l'une quelconque des revendications 5 à 11, dans laquelle la première partie de table (36) de la table (32) de chaque dispositif de support et de déchargement (18) est pourvue de moyens antidérapants conçus pour permettre au tube (T) de glisser sans déraper le long de la première partie de table (36) lorsque la table (32) est amenée à tourner par rapport à la position de travail.

13. Machine selon la revendication 12, dans laquelle lesdits moyens antidérapants comprennent des chaînes à rouleaux (48) montées sur des pignons librement rotatifs (50, 52) disposés au niveau d'une ou des deux extrémités longitudinales de la première partie de table (36).

14. Machine selon l'une quelconque des revendications 5 à 13, dans laquelle ledit mouvement de roto-translation de la table (32) de chaque dispositif de support et de déchargement (18) permet, au moins dans une phase de celui-ci, que le mouvement de translation dans la direction verticale et le mouvement rotatif autour dudit axe de rotation (x2) soient effectués simultanément.

15. Machine selon la revendication 14, dans laquelle chaque dispositif de support et de déchargement (18) comprend une première structure de support (54), qui supporte la table (32) de manière rotative autour dudit axe de rotation (x2), et une seconde structure de support (58), sur laquelle ladite première structure de support (54) est montée de manière verticalement mobile, et dans lequel ladite unité d'entraînement (34) comprend des premiers moyens d'actionnement (62) permettant de commander le mouvement de translation verticale de ladite première structure de support (54) par rapport à ladite seconde structure de support (58), et des seconds moyens d'actionnement (70) interposés entre la table (32) et ladite première structure de support (54) permettant de commander la rotation de la table (32) par rapport à ladite première structure de support (54) autour dudit axe de rotation (x2).

16. Machine selon la revendication 15, dans laquelle lesdits seconds moyens d'actionnement (70) comprennent au moins un premier actionneur linéaire (72) et au moins un second actionneur linéaire (74), fonctionnant en série par rapport audit premier actionneur linéaire (72), dans laquelle ledit au moins un premier actionneur linéaire (72) est agencé pour produire un mouvement rotatif de la table (32) selon un premier angle autour dudit axe de rotation (x2), et dans lequel ledit au moins un second actionneur linéaire (74) est agencé pour produire un mouvement rotatif de la table (32) selon un second angle supérieur audit premier angle autour dudit axe de rotation (x2).

17. Machine selon la revendication 16, dans laquelle ladite unité d'entraînement (34) comprend en outre au moins un mécanisme à came (88, 90) interposé entre la table (32) et ladite première structure de support (54) et conçu de telle sorte que la loi de mouvement du mouvement rotatif de la table (32) autour dudit axe de rotation (x2), commandé par ledit au moins un second actionneur linéaire (74), dépend de la loi de mouvement du mouvement de translation verticale de la table (32), commandé par ledit premier moyen d'actionnement (62), au moins en partant d'un angle de rotation donné de la table (32) autour dudit axe de rotation (x2) par rapport à l'horizontale.

18. Machine selon l'une quelconque des revendications 5 à 17, dans laquelle ledit axe de rotation (x2) de la table (32) est espacé du centre de gravité (G) de la première partie de table (36) dans la direction de l'axe d'avance (x) de la machine, de telle sorte qu'une rotation de la table (32) dans un sens ou l'autre autour dudit axe de rotation (x2) conduit à un déplacement vers le bas ou vers le haut du centre de gravité (G) de la première partie de table (36).
